(19) Europäisches Patentamt
European Patent Office
Office européen des brevets

(11) **EP 2 976 372 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(21) Anmeldenummer: **14712274.1**

(22) Anmeldetag: **21.03.2014**

(51) Int Cl.:
**C08G 18/73** (2006.01)      **C08G 18/76** (2006.01)
**C08G 63/08** (2006.01)      **C08G 63/78** (2006.01)
**C08G 18/42** (2006.01)      **C09J 175/06** (2006.01)

(86) Internationale Anmeldenummer:
**PCT/EP2014/055702**

(87) Internationale Veröffentlichungsnummer:
**WO 2014/147220 (25.09.2014 Gazette 2014/39)**

(54) **KLEBSTOFFZUSAMMENSETZUNG AUF BASIS EINES POLYESTERURETHANS UND POLYESTERURETHAN**

ADHESIVE COMPOSITION BASED ON A POLYESTER URETHANE, AND POLYESTER URETHANE

COMPOSITION ADHÉSIVE À BASE D'UN POLYESTER D'URÉTHANE ET POLYESTER D'URÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2013   DE 102013205110**

(43) Veröffentlichungstag der Anmeldung:
**27.01.2016   Patentblatt 2016/04**

(73) Patentinhaber:
• **Fraunhofer-Gesellschaft zur Förderung der angewandten Forschung e.V.**
**80686 München (DE)**
• **Westfälische Hochschule Gelsenkirchen Bocholt Recklinghausen**
**45879 Gelsenkirchen (DE)**

(72) Erfinder:
• **BRETZ, Inna**
**46049 Oberhausen (DE)**
• **KUREK, Johanna**
**46049 Oberhausen (DE)**

• **KOPITZKY, Rodion**
**33609 Bielefeld (DE)**
• **KABASCI, Stephan**
**12207 Berlin (DE)**
• **KOCH, Klaus-Uwe**
**45659 Recklinghausen (DE)**
• **SCHOLLMEYER, Heike**
**45657 Recklinghausen (DE)**

(56) Entgegenhaltungen:
**EP-A1- 1 236 753      EP-A1- 2 492 328**
**WO-A1-96/01863      US-A- 4 804 691**
**US-B1- 6 365 680**

• **HILTUNEN K. ET AL.: "LACTIC ACID BASED POLY(ESTER-URETHANE)S: THE EFFECTS OF DIFFERENT POLYMERIZATIONCONDITIONS ON THE POLYMER STRUCTURE AND PROPERTIES", JOURNAL OF APPLIED POLYMER SCIENCE, vol. 65, no. 5, 2 May 1997 (1997-05-02), pages 865-873,**

EP 2 976 372 B1

**Beschreibung**

Die Anmeldung betrifft eine Klebstoffzusammensetzung und ein Polyesterurethan, das in dieser Klebstoffzusammensetzung als Bestandteil enthalten ist. Die Klebstoffzusammensetzung eignet sich unter anderem für den Einsatz im Bereich der Haftklebstoffe, insbesondere Haftschmelzklebstoffe (Hotmelt Pressure Sensitive Adhesives - HMPSA). Das Polyesterurethan weist als Polyester-Komponente polymere Hydroxycarbonsäure-Einheiten auf. Wesentlichster Vertreter der Hydroxycarbonsäuren ist hierbei die Milchsäure; die Polyester-Komponente ist hierbei also eine Polymilchsäure (PLA).

PLA wird nach dem Stand der Technik mittels Ringöffnungspolymerisation aus Lactid (dem cyclischen Dimer der Milchsäure) hergestellt. Alternativ kann PLA auch durch Polykondensation direkt aus der Milchsäure erzeugt werden. Hierbei ist allerdings die Gegenwart eines metallorganischen Katalysators (insbesondere auf Zinn-Basis) erforderlich.

Als biologisch abbaubares Material und auf Basis nachwachsender Rohstoffe ist PLA für nachhaltige Anwendungen von großem Interesse. Es hat allerdings den Nachteil, dass es aufgrund seiner deutlich über der Raumtemperatur liegenden Glasübergangstemperatur ($T_g$) von ca. 50 bis 65°C bei Raumtemperatur steif und spröde ist und daher für die Anwendung als Haftklebstoff keine guten Voraussetzungen mitbringt. Im Gegenzug besitzt es allerdings hervorragende optische Eigenschaften und ein hohes E-Modul.

Haftklebstoffe (Pressure Sensitive Adhesives - PSA) sind permanentklebrige Produkte, die in Kontakt mit einem zu beklebenden Substrat bei Raumtemperatur ohne eine Aktivierung durch Lösungsmittel oder Wärme und lediglich durch Andrücken an die Oberfläche Adhäsion aufbauen.

Die Klebkraft eines Haftklebstoffs hängt sowohl von der Adhäsion des Klebstoffs zu den zu beklebenden Substraten ab als auch von seiner inneren Festigkeit, also der Kohäsion. Ein Haftklebstoff wird nach dem Stand der Technik aus einem Basispolymer als kohäsionsbestimmender Komponente sowie aus Tackifiern und Weichmachern als adhäsionsbestimmenden Bestandteilen und weiteren Additiven für spezifische Eigenschaften formuliert.

Für derartige Haftklebstoffe werden als Rückgratpolymere bzw. Basispolymere üblicherweise Polyacrylate und styrolbasierte Blockcopolymere eingesetzt, also Formulierungen mit hohen Anteilen fossiler Rohstoffe. Ferner sind Naturkautschuke als Basispolymere bekannt, diese sind aber für Allergiker problematisch.

Wesentlichste Parameter eines Haftklebstoffs sind die Glasübergangstemperatur ($T_g$) und das elastische Modul (G'), da sie die generellen temperaturabhängigen viskoelastischen Eigenschaften bestimmen. Das Rückgratpolymer einer Haftklebstoffformulierung kann daher nicht frei gewählt werden, sondern muss im Hinblick auf Beweglichkeit oder Steifigkeit von Kettenbausteinen entwickelt werden, um im Zusammenspiel mit den anderen Komponenten der Klebstoffformulierung innere Festigkeit und Benetzbarkeit von Substraten zu gewährleisten. Wesentlich für die Kohäsion ist insbesondere auch das Molekulargewicht des Rückgratpolymers.

Die US 5,252,646 beschreibt Schmelzklebstoffzusammensetzungen, die Polymilchsäure-Homopolymere oder -Copolymere enthalten. Aufgrund der hohen Glasübergangstemperatur haben sich derartige Klebstoffe aber für die Anwendung als Haftklebstoff als ungeeignet erwiesen.

Auch die EP 1 236 753 A1 beschreibt Schmelzklebstoffe mit Polymilchsäure-Basispolymeren, die durch Kupplung mit aliphatischen Polyestern modifiziert wurden. Eine Einung als Haftklebstoff wird hierbei allerdings nicht offenbart.

Die WO 96/01863 A1 beschreibt die Herstellung von Polyesterurethanen, bei denen eine Hydroxycarbonsäure, insbesondere Milchsäure, und ein Diol zu einem Präpolymer umgesetzt werden, wobei anschließend durch Umsetzung mit einem Diisocyanat diese Präpolymer-Einheiten unter Bildung von Urethan-Gruppen verlängert werden. Eine Anwendung als Klebstoff wird aber nicht beschrieben.

Die US 4,804,691 und die WO 96/01863 A1 offenbaren die Umsetzung von Lactiden beziehungsweise Hydroxycarbonsäuren mit Diolen oder mehrwertigen Alkoholen zur Herstellung biologisch abbaubarer Klebstoffe. Als Diolkomponenten werden hierbei Ethylenglycol und 1,3-Diole offenbart.

Die EP 2 492 328 A1 betrifft eine thermisch entfernbare Klebefolie mit einem Haftklebstoff. Für den Haftklebstoff wird eine Hydroxycarbonsäure mit einer substöchiometrischen Menge eines Diols, einer dibasischen Säure und einem Vernetzungsreagenz umgesetzt, wobei das Vernetzungsreagenz ein polyfunktionelles Isocyanat oder ein Isocyanurat sein kann, so dass ein quervernetztes Polyesterurethan entsteht.

Eine Aufgabe der vorliegenden Erfindung liegt daher in der Bereitstellung eines Haftklebstoffs auf Basis von Hydroxycarbonsäure-Polyestern, der die Nachteile des Stands der Technik nicht aufweist. Eine weitere Aufgabe der vorliegenden Erfindung ist die Bereitstellung eines Haftklebstoffs, der auf einem möglichst hohen Anteil nachwachsender Rohstoffe basiert, und insbesondere ein Basispolymer auf Grundlage nachwachsender Rohstoffe aufweist.

Zumindest eine dieser Aufgaben wird durch den Gegenstand der unabhängigen Ansprüche gelöst. Unteransprüche, die Beschreibung und die Beispiele lehren vorteilhafte Weiterbildungen.

Erfindungsgemäß wurde festgestellt, dass durch ein maßgeschneidertes Polyesterurethan und hierauf abgestimmte weitere Komponenten eine Klebstoffzusammensetzung bereitgestellt werden kann, die sich hervorragend als Haftklebstoff eignet.

Gemäß einem ersten Aspekt betrifft die vorliegende Erfindung eine Klebstoffzusammensetzung, die ein Polyesterurethan als Hauptbestandteil des Basispolymers enthält, insbesondere das im zweiten Aspekt näher erläuterte Polyesterurethan. Diese Klebstoffzusammensetzung ist insbesondere für Haftklebstoffe vorteilhaft und hier wiederum ganz besonders für Haftschmelzklebstoffe.

Bei Schmelzklebstoffen handelt es sich um Klebstoffe, die im geschmolzenen Zustand aufgetragen werden und durch den physikalischen Prozess der Abkühlung die Klebeverbindung ausbilden bzw. ausbilden können. Dabei sind sie nach dem Abbindevorgang nicht permanent klebrig.

Haftschmelzklebstoffe vereinen die positiven Eigenschaften der Haft- und der Schmelzklebstoffe: es handelt sich um lösemittelfrei herstellbare Klebstoffe, die aufgrund der Schmelzfähigkeit vorteilhaft hergestellt und verarbeitet werden können. Haftklebstoffe werden für permanente Klebungen eingesetzt, vielfach aber auch bei Klebungen, bei denen eine spätere Trennung gewünscht wird (z.B. Pflaster, Klebebänder, Folien, Selbstklebeetiketten). Wichtige (direkte) klebtechnische Eigenschaften bei Haftklebstoffen sind der Tack beziehungsweise die Anfangsklebrigkeit und die Initialhaftung bei Raumtemperatur.

Die erfindungsgemäße Klebstoffzusammensetzung gemäß dem ersten Aspekt der Erfindung enthält einen Kautschuk, ein Basispolymer, das als Hauptbestandteil ein Polyesterurethan aufweist oder das aus diesem Polyesterurethan besteht, und daneben einen Weichmacher und/oder einen Tackifier. Das hierfür einzusetzende Polyesterurethan ist erhältlich, indem zunächst (Schritt A)) ein wie nachfolgend definiertes Diol, ein Diisocyanat und eine Hydroxycarbonsäurekomponente, ausgewählt aus freien α-Hydroxycarbonsäuren, freien β-Hydroxycarbonsäuren und cyclischen Dimeren der α-Hydroxycarbonsäuren, bereitgestellt wird. Nachfolgend (Schritt B)) wird ein Präpolymer durch Polykondensation der Hydroxycarbonsäurekomponente in Gegenwart einer substöchiometrischen Menge des Diols bei einer Temperatur größer 100 °C und in Gegenwart eines Katalysators hergestellt. Schließlich (Schritt C)) wird das erhaltene Präpolymer mit dem Diisocyanat umgesetzt, so dass eine Reaktion der freien Hydroxy-Gruppen des Präpolymers mit den Isocyanat-Gruppen erfolgt.

"Hauptbestandteil" bedeutet hierbei, dass zumindest 50 Gew.-% des Basispolymers das im vorstehenden Absatz definierte Polyesterurethan ist. Üblicherweise beträgt der Anteil des im vorstehenden Absatz definierten Polyesterurethans (worunter stets auch Gemische verschiedener erfindungsgemäßer Polyesterurethane zu verstehen sind) aber zumindest 80 Gew.-%, vielfach zumindest 95 Gew.-%. Um die Vorgabe eines Klebstoffs auf Basis nachwachsender Rohstoffe möglichst gut zu erfüllen, ist ferner klar, dass Basispolymere, die ausschließlich aus dem im vorstehenden Absatz definierten Polyesterurethan bestehen, vorteilhaft sind. Wenn das Basispolymer nicht aus dem im vorstehenden Absatz definierten Polyesterurethan besteht, so besteht der verbleibende Rest im Regelfall aus einem oder mehreren anderen Polyesterurethanen und/oder einem oder mehreren der im vierten Aspekt der vorliegenden Anmeldung beschriebenen Polymere. Häufig wird es sich dann bei den Polyesterurethanen um zu den vorstehend definierten Verbindungen chemisch ähnliche Verbindungen handeln, insbesondere Polyesterurethane die auf einer beliebigen Hydroxycarbonsäurekomponente basieren.

Unter einem Tackifier wird ein polymerer Zusatzstoff für die Basispolymere verstanden, der dessen Autohäsion (Eigenklebrigkeit, Selbsthaftung) erhöht, so dass diese nach kurzem leichtem Andruck fest auf Oberflächen haften. Um das zu erreichen, besitzen die erfindungsgemäß eingesetzten Tackifier üblicherweise eine Molmasse von 200 bis 2.000 g/mol Ferner weisen die Tackifier üblicherweise eine Glasübergangstemperatur auf, die oberhalb der des Basispolymeren liegt.

Unter einem Kautschuk wird ein Kautschuk gemäß DIN 53 501 verstanden, also ein unvernetztes, aber vernetzbares Polymer mit gummielastischen Eigenschaften bei Raumtemperatur, mit der Maßgabe, dass es kein Polyesterurethankautschuk ist. Der Offenbarungsgehalt zur Definition des Begriffs Kautschuk gemäß der DIN 53 501 wird hiermit durch Rückbezug aufgenommen.

Erfindungsgemäß wurde festgestellt, dass sich Klebstoffzusammensetzungen, die - wie erfindungsgemäß vorgeschlagen - einen Kautschuk enthalten, signifikant von Zusammensetzungen unterscheiden, die diesen nicht enthalten. Durch den Zusatz des Kautschuks wurde überraschend eine deutliche Verbesserung der Klebkraft erzielt. Daneben wurde festgestellt, dass immer auch ein Weichmacher oder ein Tackifier mit weichmachenden Eigenschaften zugegen sein muss, um die Glasübergangstemperatur weiter zu senken. Setzt man beispielsweise reines (unmodifiziertes) PLA ein, so ist sehr viel Weichmacher nötig, um eine verarbeitbare Mischung zu erhalten; dadurch wird ein Gemisch erhalten, das eine zu geringe Viskosität aufweist und daher als Klebstoff ungeeignet ist. Durch Verwendung der mit dem vorstehend beschriebenen Verfahrens erhältlichen Polyesterurethane, insbesondere der im zweiten Aspekt näher erläuterten Polyesterurethane auf Basis eines vicinalen Diols, sowie durch den Zusatz des Kautschuks sind die Eigenschaften der daraus hergestellten Zusammensetzung so vorteilhaft, dass sich die Zusammensetzung als Klebstoff und insbesondere als Haftklebstoff eignet.

Für die Herstellung des in der erfindungsgemäßen Klebstoffzusammensetzung enthaltenen Polyesterurethans kann in Schritt A) entweder ein vicinales Diol mit mindestens einer sekundären oder tertiären Hydroxygruppe ausgewählt werden oder ein im Kohlenstoffgerüst verzweigtes, Alkyl-substituiertes oder Cycloalkyl-substituiertes Diol mit mindestens fünf, insbesondere mindestens sechs Kohlenstoffatomen ausgewählt werden. Neben den im zweiten Aspekt näher erläuterten vicinalen Diolen sind beispielsweise folgende Diole geeignet: Neopentylglycol, 2-Methyl-1,5-pentandiol, 2-Ethyl-1,3-propandiol und 2-Methyl-1,2-butandiol), Cycloalkandiole (beispielsweise 1,2- und 1,4-Cyclohexandimethanol). Mit den vorstehend genannten Diolen ist ein Polyesterurethan herstellbar, das als Basispolymer für die erfindungsgemäßen Klebstoffzusammensetzungen gut geeignet ist. Oft zeigen insbesondere die Polyesterurethane auf Basis vicinaler Diole gute Eigenschaften.

Gemäß einer Ausführungsform enthält das Basispolymer als Hauptbestandteil ein Polyesterurethan, bei dem das bei der Polykondensation eingesetzte Diol ein vicinales Diol mit mindestens einer sekundären oder tertiären Hydroxygruppe ist, oder besteht aus einem derartigen Polyesterurethan. Erfindungsgemäß wurde festgestellt, dass mittels eines aus einem derartigen Diol erhaltenen Polyesterurethans Rückgratpolymere für Klebstoffe bereitgestellt werden können, die eine geringe Kristallisationsneigung besitzen und die Vorgaben hinsichtlich der für Haftklebstoffe geforderten Kohäsionseigenschaften erfüllen. Insbesondere weisen sie einen niedrigeren Glasübergang als PLA auf. Diese Eigenschaften sind dabei auch unabhängig davon realisierbar, ob die vorstehend näher erläuterte Kautschukkomponente enthalten ist.

Gemäß einer Ausführungsform kann als Weichmacher Polyesterpolyol eingesetzt werden. Da diese Komponente auch Tackifier-Eigenschaften aufweist, sind dann keine weiteren Komponenten nötig, um zu einer Klebstoffzusammensetzung zu gelangen, die sich als Haftklebstoff eignet. Im Regelfall wird allerdings neben dem Rückgratpolymer und dem Weichmacher noch ein separater Tackifier vorliegen. Der Weichmacher dient dann in diesem System im Wesentlichen zur Erniedrigung der Glasübergangstemperatur; mittels des Tackifiers wird im Wesentlichen eine ausreichende Eigenklebrigkeit erreicht.

Gemäß einer weiteren Ausführungsform wird als im Basispolymer enthaltenes Polyesterurethan ein Polyesterurethan auf Basis von D- und L-Milchsäure eingesetzt. Besonders bevorzugt wird ein Basispolymer eingesetzt, das vollständig aus diesem Polyesterurethan auf Basis von D- und L-Milchsäure besteht.

Zumindest bei einem derartigen Basispolymer wird eine Klebstoffzusammensetzung erhalten, bei der besonders wenig Tackifier und Weichmacher zugegeben werden muss.

Gemäß einer weiteren Ausführungsform beträgt der Anteil des Basispolymers an der Klebstoffzusammensetzung mindestens 10 Gew.-%, der des Weichmachers maximal 70 Gew.-% und der des Tackifiers maximal 70 Gew.-%. Häufig wird aufgrund der vorteilhaften Eigenschaften des Polyesterurethans der Anteil des Basispolymers 20 bis 60 Gew.-%, der des Weichmachers 10 bis 60 Gew.-% und der des Tackifiers 15 bis 60 Gew.-% betragen. In besonders vorteilhaften Ausführungsformen beträgt der Anteil des Basispolymers 25 bis 55 Gew.-%, der des Weichmachers 15 bis 50 Gew.-% und der des Tackifiers 25 bis 55 Gew.-%.

Unabhängig hiervon wurde festgestellt, dass üblicherweise etwas mehr Tackifier als Weichmacher sinnvoll ist. So ist der Anteil des Weichmachers häufig um 10 bis 50 % höher als der des Tackifiers, wobei die Prozentangabe sich hier auf den Gewichtsanteil des Tackifiers bezieht. Ferner ist unabhängig hiervon der Anteil des Basispolymers häufig etwa gleich hoch wie der des Tackifiers, d.h. bezogen auf den Gewichtsanteil des Tackifiers ist der des Basispolymers häufig um maximal 25 % niedriger oder maximal 25 % höher. Diese Angaben beziehen sich im Wesentlichen auf Systeme, bei denen aufgrund des im Hinblick auf den Weichmacher- und Tackifier-Anteil maßgeschneiderten Rückgratpolymers besonders wenig Tackifier und Weichmacher enthalten sein muss.

Als Kautschuk kann erfindungsgemäß ein Naturkautschuk und/oder ein Synthesekautschuk eingesetzt werden. Als Synthesekautschuk kommt insbesondere ein Material in Betracht, das ausgewählt ist aus Styrol-Butadien-Kautschuk (SBR), Isoprenkautschuk (IR), Polybutadien-Kautschuk (BR), Nitrilkautschuk (NBR), Butylkautschuk (IIR), Ethylen-Propylen-Elastomeren (EPM und EPDM), Polyetherurethan-Kautschuk (EU), AcrylatKautschuk (ACM), Ethylen-Acrylat-Elastomeren (EAM), Ethylen-Vinylacetat-Copolymeren (EVA), Styrol-Butadien-Kautschuk (SBR), hydriertem Nitrilkautschuk (H-NBR), Carboxy-Gruppen-haltigem Nitrilkautschuk (XNBR) und Mischungen hiervon. Nur beispielhaft seinen thermoplastische Elastomere wie thermoplastisches Polyurethan genannt. Gemäß einer Ausführungsform wird als Kautschuk ein Polymer eingesetzt, das eine Reißdehnung (gemäß DIN 53504) von mindestens 300% und eine Zugfestigkeit (gemäß DIN 53504) von mindestens 15 N/mm$^2$ aufweist. Derartige Kautschuke erfüllen besonders gut die Vorgaben für die herzustellenden Zusammensetzungen.

Gemäß einer weiteren Ausführungsform ist der Anteil des Kautschuks an der Klebstoffzusammensetzung maximal 25 Gew.-%. Häufig wird der Anteil allerdings etwas kleiner sein, da ansonsten die Eigenklebrigkeit unter dem Anteil des Kautschuks leiden kann. Daher beträgt gemäß einer Vorzugsvariante der Anteil des Kautschuks 0,5 bis 15 Gew.-%, insbesondere 1 bis 7 Gew.-%, beispielsweise 2 bis 5 Gew.-%.

Gemäß einer Ausführungsform können für die erfindungsgemäße Klebstoffzusammensetzung als Weichmacher Polyester, Polyesterpolyole und niedermolekulare Ester (also insbesondere Ester mit Molekulargewichten kleiner 500 g/mol) eingesetzt werden. Als besonders geeignete niedermolekulare Ester sind - da sie biologisch abbaubar sind - Hydroxycarbonsäureester (insbesondere Zitronensäuretrialkylester), acyclische Dicarbonsäureester und epoxidierte Triacylglycerole und epoxidierte Monoester zu nennen. Daneben sind grundsätzlich aber auch alle Weichmacher denkbar, die in "Ullmann's Encyclopedia of Industrial Chemistry, Sixth Edition, 2001 Electronic Release" Im Kapitel "plasticizer" aufgeführt sind, dessen Offenbarungsgehalt diesbezüglich vollumfänglich durch Rückbezug aufgenommen wird.

Gemäß einer weiteren Ausführungsform werden als Tackifier aliphatische, cyclische oder cycloaliphatische Kohlenwasserstoffe, petrochemischen Harze, Kolophoniumharze, Terpenphenolharze, Cumaronindenharze, α-Methylstyrolharze, polymerisierte Tallharzester und Ketonaldehydharze, eingesetzt . Mit den genannten Verbindungen ist es möglich, auch für den Tackifier Naturstoffe einzusetzen, so dass die Herstellung eines Klebstoffs auf Basis nachwachsender Rohstoffe auch von Seiten des Tackifiers kein Problem darstellt.

Gemäß einer weiteren Ausführungsform kann die Klebstoffzusammensetzung neben den vorstehend genannten Komponenten auch noch Additive zur Maßschneiderung der Eigenschaften der Klebstoffzusammensetzung enthalten. Häufig werden die Additive in einem (bezogen auf die gesamte Klebstoffzusammensetzung) Anteil kleiner 25 Gew.-% vorliegen, im Ausnahmefall und für bestimmte Anwendungen können sie aber auch darüber liegen (beispielsweise wenn für bestimmte Anwendungen hohe Füllstoffanteile vonnöten sind). Als Additive sind insbesondere zu nennen: Hydrolyseschutzmittel, Wasserfänger, Füllstoffe, Mikrokugeln, Alterungsschutzmittel (Antioxidantien), Lichtschutzmittel, UV-Schutzmittel, rheologische Additive, Flammschutzmittel, Leitfähigkeitsverbesserer, Biozide und auch mehrere der vorgenannten Materialien. Daneben können auch Vernetzer für eine bessere Verankerung an einem Trägermaterial vorhanden sein oder auch Nukleierungsmittel, um die Homogenität der Zusammensetzung zu verbessern.

Als Füllstoffe können sowohl verstärkende Additive wie z.B. Ruß als auch nichtverstärkende wie z.B. Kreide oder Bariumsulfat eingesetzt werden. Weitere Beispiele sind Talkum, Glimmer, pyrogene Kieselsäure, Silikate, Zinkoxid, Mikrovollglaskugeln, Mikrohohlglaskugeln und/oder Mikrokunststoffkugeln aller Art, auch Mischungen der genannten Stoffe können eingesetzt werden.

Zu den geeigneten Antioxidantien zählen hierbei beispielsweise Hydrochinonderivate, organische Schwefelverbindungen, organische Phosphorverbindungen und dergleichen.

Als Lichtschutzmittel und UV-Absorber sei auf den hier maßgeblichen Stand der Technik verwiesen, z.B. das "Taschenbuch der Kunststoffadditive, München 1979".

Beispiele für rheologische Additive sind pyrogene Kieselsäuren, Schichtsilikate (Bentonite), hochmolekulare Polyamidpulver oder Rizinusölderivat-Pulver.

Die Herstellung der Klebstoffformulierung wird nachfolgend ohne Einschränkung der Allgemeinheit noch näher anhand eines Basispolymers, basierend auf dem wichtigsten Vertreter der erfindungsgemäßen Hydroxycarbonsäure-Komponente, nämlich der Milchsäure, beschrieben. Dies heißt allerdings nicht, dass die nachfolgenden Ausführungen nur für die Milchsäure und Basispolymere auf PLA-Basis gelten; vielmehr sind diese anmeldungsgemäß stets auf sämtliche einsetzbaren Hydroxycarbonsäure-Komponenten oder Gemischen verschiedener Hydroxycarbonsäuren, die den Vorgaben für die Hydroxycarbonsäure-Komponente genügen, zu beziehen. An dieser Stelle sei auch darauf hingewiesen, dass sämtliche im zweiten Aspekt offenbarten Ausführungsformen und vorteilhaften Weiterbildungen auch für den ersten Aspekt gültig sind und zwar nicht nur für Klebstoffformulierungen auf Basis eines aus einem vicinalen Diol erhaltenen Polyesterurethans sondern für Klebstoffformulierungen auf Basis jeglicher Diole (zu nennen sind hier beispielsweise die im zweiten Aspekt offenbarten Reaktionsbedingungen, Mischungsverhältnisse der verwendeten Stoffe und die für die verschiedenen Stoffe offenbarten Substanzklassen und Einzelstoffe):

Zur Herstellung der Klebstoffformulierung werden die Basispolymere bzw. das Basispolymer und alle weiteren erforderlichen Materialien (Weichmacher, Tackifier, Kautschuk und gegebenenfalls auch Additive) in einem erwärmten Gefäß aufgeschmolzen und vermischt. Hierfür kann beispielsweise ein Thermoblock dienen oder auch ein Heizbad. Die konkreten Bedingungen für die Herstellung eines derartigen Gemischs sind dem Fachmann bekannt.

Die Auswahl der eingesetzten Komponenten kann insbesondere auf der Verträglichkeit mit den Polymilchsäure-Basispolymeren aufgrund ähnlicher struktureller Eigenschaften basieren. Denkbar sind insbesondere Zitronensäureester und -derivate, Polyethylenglycole, polare Kolophoniumester und aromatische Kohlenwasserstoffharze als Tackifier beziehungsweise Weichmacher. Hierbei sind beispielsweise Kombinationen von aromatischem Kohlenwasserstoffharz mit Zitrat positiv. Die aromatischen Kohlenwasserstoffharze in der Funktion als Tackifier wirken sich im Regelfall gut auf die Eigenklebrigkeit aus, während Zitrate in diesem System als Weichmacher wirken und positiven Einfluss auf die Verarbeitbarkeit haben.

Zur Erzeugung eines Klebstofffilms können die so erhaltenen Gemische mittels eines automatischen Filmziehgeräts (beispielsweise dem Universalapplikator der Firma Zehntner) verwendet werden.

Im industriellen Maßstab kommen hinsichtlich der Prozessfolge von Aufschmelz-, Mischungs- und Beschichtungsvorgang zunächst Batch-Verfahren in Frage. Kontinuierliche Verfahren, bei denen die Prozesse zeitlich und anlagentechnisch direkt aufeinanderfolgen, sind möglich, hängen aber von den jeweiligen Rahmenbedingungen ab. Als Schmelz- und Mischgeräte werden üblicherweise beheizbare Kneter und Mischer verwendet. Das Aufbringen von Filmen kann mit bereits vorhandenen Beschichtungsanlagen für Klebebänder und/oder Etiketten durchgeführt werden.

Die erfindungsgemäßen Haftschmelzklebstoff-Formulierungen haben den Vorteil, dass sie zu sehr großen Anteilen aus nachwachsenden Rohstoffen gebildet werden können. Dieser Anteil kann auch bis zu 100 Gew.-% gesteigert werden. Im Regelfall liegt er bei mindestens 40 Gew.-%; häufig aber deutlich darüber, beispielsweise mindestens 70 Gew.-% oder sogar mindestens 90 Gew.-%.

Die vorteilhaften Eigenschaften der erfindungsgemäßen Klebstoff-Formulierungen können insbesondere mittels dynamisch-mechanischer Analyse (DMA) und 180°-peel-Test gezeigt werden.

Mittels der dynamisch-mechanischen Analyse können sowohl klebtechnische Eigenschaften als auch für die Verarbeitung relevante Größen ermittelt werden. Hiermit kann die komplexe Viskosität ($\eta^*$) aus den jeweiligen Anteilen des Speichermoduls (G') und des Verlustmoduls (G") am komplexen Schubmodul (G*) und der Winkelfrequenz ($\omega$) auf folgende Weise ermittelt werden:

$$\eta^* = G^*/\omega \quad \text{mit } G^* = [G'^2 + G''^2]^{1/2}$$

Die dynamisch-mechanische Analyse wurde mit einem BOHLIN-CVO120-Rheometer der Firma Malvern Instruments durchgeführt. Für die Durchführung der dynamisch-mechanischen Analyse wurden folgende Parameter festgelegt:

Messmethode: Oszillation; Messgeometrie: Platte-Platte mit $\varnothing$ = 25 mm;
Temperaturbereich: von -10°C bis 160 °C; Winkelfrequenz: 10 rad/s.

Als Anhaltspunkt für die Klebrigkeit von Haftklebstoffen existiert das sogenannte Dahlquist-Kriterium. Anhand dessen sowie anhand der Kurvenverläufe von Speichermodul und Verlustmodul können weitere Informationen über die klebtechnischen Eigenschaften zugänglich gemacht werden. Im Rahmen der Erfindung dieser Klebstoffformulierung wurde zusätzlich herausgefunden, dass das Dahlquist-Kriterium eine notwendige, aber im Regelfall nicht hinreichende Bedingung für die Charakterisierung als "haftklebrig" darstellt. Zusätzlich ist die Ausbildung eines Kautschuk-Plateaus von großer Bedeutung. Anhand dieser beiden Kriterien, somit anhand der Kurvenverläufe von Speichermodul und Verlustmodul, können wichtige Informationen über die klebtechnischen Eigenschaften zugänglich gemacht werden.

Mittels des 180°-peel-Tests können Messgrößen für die Klebkraft von Folien (beispielsweise eines Klebebands oder eines Etiketts), die mit dem Haftklebstoff beschichtet sind, ermittelt werden.

Der 180°-peel-Test erfolgt gemäß der Prüfvorschrift FTM 1 (FINAT-Testmethode Nr. 1 gemäß "FINATTechnisches Handbuch, 7. Ausgabe 2005"). Die Prüfungen gem. FTM 1 wurden mit einer Universal-Prüfmaschine der Fa. Zwick durchgeführt. Als Substratmaterial dient im Rahmen der vorliegenden Anmeldung Edelstahl. Es wurden Prüfplatten mit einer hochglanzpolierten Oberfläche und zertifizierter Rauhtiefe verwendet. Als Ergebnis der Prüfung eines Klebebandes erhält man die mittlere Klebkraft $F_{mit}$.

Mittels der vorstehend beschriebenen Messverfahren wurde festgestellt, dass Viskositäten von 500 mPa s bis 4700 mPa s erhalten werden. Die mittlere Klebkraft beträgt üblicherweise zumindest 0,5 N/inch, im Regelfall aber mindestens 3 N/inch und häufig sogar über 15 N/inch. Für Etikettierungen zeichnet sich ein Material mit einer Klebkraft von größer 3 N/inch; für den Einsatz als haftklebrige Schicht eines Klebebands liegen die Werte üblicherweise über 10 N/inch oder sogar über 15 N/inch.

Gemäß einem zweiten Aspekt wird die vorstehend beschriebene Aufgabe durch ein Polyesterurethan gelöst, das mittels des Verfahrens mit den folgenden Schritten hergestellt werden kann:

Zunächst wird ein vicinales Diol, ein Diisocyanat und eine Hydroxycarbonsäurekomponente bereitgestellt.
Die Hydroxycarbonsäurekomponente kann entweder eine (freie) $\beta$-Hydroxycarbonsäure sein oder eine (freie) $\alpha$-Hydroxycarbonsäure. Alternativ kann statt einer $\alpha$-Hydroxycarbonsäure auch ein cyclisches Dimer derselben bereitgestellt werden (wie dies z.B. in Form des Lactids bei der Milchsäure bekannt ist).
Unter einem vicinalen Diol wird ein Diol verstanden, bei dem die Hydroxygruppen an Kohlenstoffatome gebunden sind, die wiederum über eine Bindung miteinander verbunden sind. Dieses vicinale Diol weist mindestens eine sekundäre oder tertiäre Hydroxygruppe auf.

Im nachfolgenden Schritt B) wird die Hydroxycarbonsäurekomponente in Gegenwart einer substöchiometrischen Menge des Diols polykondensiert, wobei ein Präpolymer erhalten wird. Diese Präpolymerisation erfolgt bei einer Temperatur größer 100°C und in Gegenwart eines Katalysators.

Das Diol dient hierbei insbesondere dem Zweck, ein Präpolymer herzustellen, das keine freien Carbonsäure-Endgruppen mehr aufweist. Es reagiert also mit der freien Carbonsäure unter Bildung eines Esters. Es versteht sich von selbst, dass über die Menge zugegebenen Diols auch der Polymerisationsgrad des gebildeten Präpolymers beeinflusst werden kann.

In Schritt C) wird schließlich das in Schritt B) erhaltene Präpolymer mit einem Diisocyanat umgesetzt. Hierbei erfolgt eine Reaktion der freien Hydroxygruppen des Präpolymers mit den Isocyanatgruppen unter Bildung von Urethan-Einheiten. Dabei erfolgt also eine Kettenverlängerung der gemäß Schritt B) erhaltenen bisterminalen Diole.

Erfindungsgemäß wurde nun festgestellt, dass mittels des vorstehend beschriebenen Polyesterurethans Rückgratpolymere für Klebstoffe bereitgestellt werden können, die eine geringe Kristallisationsneigung besitzen und die Vorgaben hinsichtlich der für Haftklebstoffe geforderten Kohäsionseigenschaften erfüllen. Insbesondere weisen sie einen niedrigeren Glasübergang als PLA auf.

Ohne sich hierauf einschränken zu wollen, werden die vorteilhaften Eigenschaften des erfindungsgemäßen Polyesterurethans insbesondere auf die Diol-Komponente zurückgeführt. Aufgrund der engen sterischen Verhältnisse bei vicinalen Diolen werden offenbar Polymere erhalten, bei denen eine parallele Anordnung der Polymerstränge und damit eine Kristallisationsneigung effektiv vermindert oder verhindert wird. Wesentlich ist, dass mittels der erfindungsgemäßen Polyesterurethane nun ressourcenschonende Haftklebstoffe, insbesondere Haftschmelzklebstoffe, bereitgestellt werden können, die auf einem sehr großen Anteil an nachwachsenden Rohstoffen basieren und die gewünschten Anforderungen erfüllen; so können Viskositäten (bei Verarbeitungstemperatur) von 700 mPa s und eine mittlere Klebkraft von über 16 N/inch erzielt werden. Im Unterschied zur vorstehend beschriebenen Klebstoffzusammensetzung wird also gemäß dem zweiten Aspekt kein beliebiges Diol eingesetzt.

Gemäß einer Ausführungsform handelt es sich bei den als Hydroxycarbonsäurekomponente eingesetzten α-Hydroxycarbonsäuren bzw. β-Hydroxycarbonsäuren und deren cyclischen Dimeren um Hydroxyalkylcarbonsäuren. Grundsätzlich sind zwar auch Aralkylhydroxycarbonsäuren geeignet; allerdings ist es bekannt, dass aromatische Systeme häufig die Kristallisationsneigung unterstützen, was im vorliegenden Fall unerwünscht ist. Daher wird es sich bei der Hydroxycarbonsäurekomponente im Regelfall um eine Alkyl-Hydroxycarbonsäure handeln. Ferner weist die Hydroxycarbonsäurekomponente im Regelfall keine weiteren funktionellen Gruppen auf, insbesondere keine weitere Hydroxy-Gruppe. Mit anderen Worten besitzt die Hydroxycarbonsäurekomponente im Regelfall genau eine Hydroxy-Gruppe und meist auch genau eine Carboxylat-Gruppe, die allerdings zu einem cyclischen Ester verbunden sein können. Bei der Alkylkette, die an die Carboxylat-Gruppe anschließt, handelt es sich im Regelfall um eine lineare Alkyl-Kette (allein schon weil die Kosten für eine derartige Carbonsäure niedriger sind als im verzweigten Fall); dies heißt allerdings nicht, dass verzweigte oder cyclische Alkyl-Reste vom Schutzbereich ausgenommen werden sollen. Im Einzelfall denkbar wären auch Hydroxycarbonsäurekomponenten mit zwei Carboxylat-Gruppen; auch diese sind aber häufig weniger gut für die Herstellung des Präpolymers geeignet, weil sie im Grundsatz zu verzweigten oder vernetzten Polymeren führen.

Gemäß einer weiteren Ausführungsform wird in Schritt A) ein Enantiomeren-Gemisch der Hydroxycarbonsäurekomponente bereitgestellt. Der Begriff Enantiomer bezieht sich hierbei auf das asymmetrische Kohlenstoff-Atom, an das die Alkoholgruppe gebunden ist. Somit ist es möglich, dass ein Gemisch einer D- und einer L-Hydroxycarbonsäure eingesetzt wird oder aber ein Gemisch eines cyclischen Dimers, in dem sowohl die D- als auch die L-Form vorliegt. Es versteht sich von selbst, dass auch Gemische der freien Hydroxycarbonsäureenantiomere und des cyclischen Dimers vorliegen können.

Erfindungsgemäß wurde erkannt, dass durch den Einsatz verschiedener Enantiomere der Hydroxycarbonsäure (bzw. des cyclischen Dimers hiervon) die Kristallisationsneigung des entstehenden Präpolymers bzw. des daraus hergestellten Polyesterurethans und auch die Glasübergangstemperatur noch weiter vermindert werden kann. Es versteht sich von selbst, dass bereits kleine Mengen des zweiten Enantiomeren ausreichen, um die Kristallisationsneigung deutlich zu vermindern. Daher sind im Regelfall bereits 10 Gew.-% des einen und 90 Gew.-% des anderen Enantiomeren ausreichend, um einen deutlichen Effekt zu erzielen. Erfindungsgemäß hat es sich insbesondere als sinnvoll erwiesen, ein Gewichtsverhältnis zwischen D- und L-Komponente von 1:6 bis 6:1, häufig von 1:4 bis 4:1 einzustellen.

Gemäß einer weiteren Ausführungsform wird in Schritt A) als Hydroxycarbonsäure Milchsäure bereitgestellt oder alternativ Lactid. Milchsäure bzw. die Polymeren hieraus sind aufgrund der leichten Zugänglichkeit unter den nachwachsenden Rohstoffen als besonders interessant einzustufen. Häufig wird - wie im vorstehenden Abschnitt beschrieben - die Milchsäure in Form eines Enantiomerengemischs eingesetzt werden, d.h. dass neben der L-Milchsäure auch D-Milchsäure zugegen ist bzw. in veresterter Form in einem Lactid-Ring vorliegt.

Gemäß einer weiteren Ausführungsform erfolgt Schritt B) zumindest zeitweise bei vermindertem Druck. Dies ist insbesondere sinnvoll, um bei der Polykondensation gebildetes Wasser zu entfernen, wie dies insbesondere der Fall ist wenn die Hydroxycarbonsäurekomponente zumindest zum Teil ausgewählt ist aus freien α-Hydroxycarbonsäuren und/oder freien β-Hydroxycarbonsäuren (und daher nicht aus dem korrespondierenden cyclischen Dimer besteht).Wie vorstehend ausgeführt, ist die Diolkomponente verantwortlich dafür, dass die Kristallisationsneigung vermindert und die Glasübergangstemperatur gesenkt werden kann. Gemäß einer Ausführungsform wird daher als vicinales Diol ein Diol der Formel R'-CH(OH)-CR'''(OH)-R'' bereitgestellt. Hierbei können R', R'' und R''' gleich oder verschieden sein oder miteinander cyclisch verbunden sein. R', R'' und R''' sind dabei insbesondere ausgewählt aus Alkylgruppen, Aralkylgruppen, Arylgruppen und Wasserstoff. Zumindest eine der beiden Gruppen R' und R'' ist dabei nicht Wasserstoff, so dass mindestens eine sekundäre oder tertiäre Alkoholgruppe enthalten ist. Es hat sich herausgestellt, dass das einfachste Diol (Ethylenglykol) von den sterischen Eigenschaften die schlechtesten Voraussetzungen mitbringt. Daher werden erfindungsgemäß substituierte Ethylenglykole eingesetzt. Im Regelfall sind dabei die Alkyl-, Aralkyl- oder Aryl-Gruppen R', R'' bzw. R''' unsubstituiert, d.h. reine Kohlenwasserstoff-Reste. Wie bereits vorstehend ausgeführt wurde, können Arylgruppen die Kristallisation negativ beeinflussen, so dass ferner üblicherweise Alkyl-Gruppen oder eventuell auch als AralkylGruppen mit längeren Alkyl-Einheiten (d.h. mindestens C2-Einheiten) eingesetzt werden. Schließlich gilt, dass meist keine tertiäre Alkohlgruppe enthalten ist, da durch den dritten Rest R''' die Reaktivität dieser Alkoholgruppe gegenüber einer sekundären Alkoholgruppe vermindert ist. Auf der anderen Seite ist - unabhängig hiervon - meist eine der beiden Alkohlgruppen eine primäre Alkohlgruppe. Dadurch wird die Reaktivität des Diols für die Reaktion gemäß Schritt B) gegenüber einem vicinalen Diol mit zwei sekundären oder tertiären Alkoholgruppen erhöht, was im Regelfall vorteilhaft für die Herstellung des Präpolymers ist.

Gemäß einer weiteren Ausführungsform weist die Diol-Komponente einen Siedepunkt von zumindest 200°C (bei Normaldruck) auf. Noch besser geeignet sind üblicherweise Diol-Komponenten mit einem Siedepunkt größer 215°C. Da die Präpolymere gemäß Schritt B) zumindest zeitweise bei vermindertem Druck hergestellt werden, kann durch die Verwendung eines Diols mit einem genügend hohen Siedepunkt verhindert werden, dass die Diol-Komponente abdestilliert und nicht mehr dem Reaktionsgemisch zur Verfügung steht. Dies macht die Verfahrensführung komplizierter und kann sogar dazu führen, dass eine aufwändige Anpassung des erfindungsgemäßen Verfahrens erforderlich ist, um zu einem vorbestimmten mittleren Molekulargewicht des Präpolymers zu gelangen. Erfindungsgemäß hat sich daher herausgestellt, dass beispielsweise im Fall der Alkyldiole wenn einerseits gilt, dass R'=H, andererseits R" zumindest drei KohlenstoffAtome enthalten sollte (insbesondere eine n-Propyl-Gruppe sein kann), noch besser aber vier Kohlenstoffe enthalten sollte (insbesondere eine n-Butyl-Gruppe sein kann). Auch cyclisch miteinander verbundene Reste R' und R" erfüllen die Vorgaben hinsichtlich des Siedepunkts im Regelfall gut.

Gemäß einer weiteren Ausführungsform wird als Diisocyanat eine Verbindung der Formel O=C=N-R-N=C=O eingesetzt. Hierbei kann R eine Aryl-Gruppe oder eine verzweigte, unverzweigte oder cyclische Alkyl- oder Aralkyl-Gruppe sein. Im Regelfall wird auch hier an den genannten Kohlenwasserstoff-Gruppen keine weitere funktionelle Gruppe gebunden sein, d.h. auch keine weitere Isocyanat-Gruppe, so dass genau zwei Isocyanat-Einheiten vorliegen. Erfindungsgemäß wurde festgestellt, dass der Einfluss der Diisocyanat-Komponente auf das Gesamtsystem des Polyesterurethans am geringsten ist. Insofern ist der Variation des Restes R hier - abgesehen von den vorstehenden Ausführungen - keine wirkliche Grenze gesetzt. Im Regelfall wird man sich daher darauf konzentrieren, möglichst wenig gesundheitsschädliche Diisocyanat-Verbindungen einzusetzen. Dies sind zum einen aromatische Diisocyanate, zum anderen Diisocyanate, bei denen die beiden Isocyanat-Gruppen über eine längere Alkyl-Kette miteinander verbunden sind, beispielsweise eine Kette mit mindestens sechs C-Atomen, beispielsweise eine lineare Alkylen-Kette, etwa $C_6H_{12}$.

An dieser Stelle sei auf die Frage der Herstellung des Polyesterurethans aus regenerativen und biogenen Quellen eingegangen. Neben der Hydroxycarbonsäurekomponente (beispielsweise der Milchsäure) sind auch Diisocyanat und vicinales Diol aus regenerativen Quellen zugänglich. Insbesondere sind aus Rizinusöl erhaltene vicinale Diole und aus Lysin erhältliche Diisocyanate denkbar. Daneben ist auch aus Adipinsäure eine ganze Palette von Verbindungen zugänglich; dies erfordert aber häufig eine aufwändige Reaktionschemie.

Gemäß einer weiteren Ausführungsform wird die in Schritt C) eingesetzte Diisocyanat-Menge im Wesentlichen äquimolar zu der Menge der (freien) OH-Gruppen des in Schritt B) erhaltenen Präpolymers eingesetzt. Im Wesentlichen heißt hierbei, dass die Stoffmenge des Diisocyanats 80 bis 120 %, bevorzugt 90 bis 110 %, besonders bevorzugt 95 bis 105 %, der Menge der freien OH-Gruppen beträgt. Die Menge freie OH-Gruppen (also die Mol n an freien OH-Gruppen) werden hierbei über die Ermittlung der OH-Zahl (OHZ) bestimmt. Die OH-Zahl bzw. Hydroxyzahl wird hierbei nach DIN EN ISO 2554 ermittelt (wie stets im Rahmen dieser Anmeldung).

Durch den Einsatz der im Wesentlichen äquimolaren Diisocyanat-Menge kann erreicht werden, dass im Wesentlichen lineare Polymere in Schritt C) entstehen und insbesondere Quervernetzungen nicht oder nur in sehr geringem Ausmaß erfolgen. Bei größeren Mengen überschüssigen Diisocyanats wäre außerdem eine Verringerung des mittleren Molekulargewichts nicht vermeidbar.

Der Verlauf der Kettenverlängerung wird durch die Menge an eingesetzten Diisocyanaten bestimmt. Die Kettenverlängerungsreaktion zwischen äquimolaren Mengen an Diisocyanat und hydroxyl-terminierten Präpolymeren verläuft sehr schnell. Die Molmasse erreicht ihr Maximum schon in wenigen Minuten. Nach dem Erreichen des Maximums findet die Abnahme der Molmasse durch die thermische Zersetzung statt. Eine Zunahme der gewichtsmittleren Molmasse $M_w$ und keine Veränderung der zahlenmittleren Molmasse $M_n$ kann als Indiz für stattfindende Nebenreaktionen gedeutet werden, wenn die eingesetzten Mengen an Diisocyanat über die im vorstehenden Absatz genannten Mengen an Diisocyanat erhöht werden. Die Carboxylgruppen können ebenfalls mit Isocyanaten zu Amiden, Carbonsäureanhydriden oder Harnstoffen reagieren. Insofern ist auch ein zu großer Unterschied der eingesetzten Mengen von Diisocyanat und Präpolymer häufig ungünstig. Die Anwesenheit von Carboxygruppen würde die Reaktion zwischen den Hydroxyl- und Isocyanatgruppen verzögern. Daher ist auch eine möglichst niedrige Säurezahl (SZ) der Präpolymere vorteilhaft.

Die stöchiometrischen Verhältnisse für eine Umsetzung von Isocyanaten mit Polyolen werden über das NCO/OH-Verhältnis (Index) angegeben. Dies errechnet sich wie folgt:

$$NCO/OH = \frac{\sum \ddot{A}quivalent\,e(NCO)}{\sum \ddot{A}quivalent\,e(OH)}$$

Bei einem Überschuss an Alkohol-Gruppen sinkt die erreichte Molmasse entsprechend dem Überschuss proportional, man erhält OH-terminierte Oligomere. Bei einem Überschuss von Isocyanat erhält man dementsprechend NCO-terminierte, reaktive Präpolymere, deren Molmasse sich über das stöchiometrische Verhältnis von NCO zu OH einstellen lässt.

Das Verfahren zur Herstellung des erfindungsgemäßen Polyesterurethans wird nachfolgend ohne Einschränkung des vorstehend Gesagten noch näher erläutert:

Hierbei wird die Polykondensation zu den erfindungsgemäßen Polyesterurethanen im Wesentlichen anhand des wichtigsten Vertreters der erfindungsgemäßen Hydroxycarbonsäure-Komponente, nämlich der Milchsäure, beschrieben. Dies heißt allerdings nicht, dass die nachfolgenden Ausführungen nur für die Milchsäure und Polymere auf PLA-Basis gelten; vielmehr sind diese anmeldungsgemäß stets auf sämtliche einsetzbaren Hydroxycarbonsäure-Komponenten oder Gemischen verschiedener Hydroxycarbonsäuren, die den Vorgaben für die Hydroxycarbonsäure-Komponente genügen, zu beziehen: Vorbemerkungen zur Polykondensation von Milchsäure:

Die direkte Polykondensation von Milchsäure ist zeit- und kostenintensiv. Daher kann eine Erhöhung der Molmassen niedermolekularer Milchsäure-Präpolymere durch Kettenverlängerungen erreicht werden. Hierbei ist insbesondere die Kettenverlängerung mit Diisocyanaten sinnvoll. Bei der Polykondensation von Milchsäure entsteht eine oligomere oder polymere Polymilchsäure mit einem Hydroxyl- und einem Carboxylterminierten Ende. Beide Enden können prinzipiell mit Isocyanaten reagieren, jedoch sind die Reaktionsgeschwindigkeiten unterschiedlich und es kommt im Fall des Carboxylterminierten Endes zur CO-Freisetzung. Daher ist es sinnvoll, die Kettenverlängerung mit einem Präpolymer durchzuführen, das nur Hydroxy-Gruppen aufweist. Hierfür kann das Carboxyl-terminierte Ende des oligomeren oder polymeren, in Schritt B) erhaltenen PLAs durch Veresterung in ein zweites Hydroxy-terminiertes Ende umgewandelt werden. Auf diese Weise erhält man dann (nach Umsetzung mit dem Diisocyanat) ein thermoplastisches Polyesterurethan.

Durchführung von Schritt B):

In Schritt B) werden bezogen auf die Hydroxycarbonsäure-Komponente typischerweise 0,1 bis 50 Mol.-% des vicinalen Diols eingesetzt. Es versteht sich von selbst, dass auch Gemische verschiedener Diole eingesetzt werden können, die jeweils den vorstehend genannten Vorgaben für vicinales Diol genügen. Häufig wird man jedoch genau eine Diol-Komponente einsetzen. Ferner wird die Diol-Komponente bezogen auf die Hydroxycarbonsäure-Komponente im Regelfall in einem Anteil von 0,1 bis 10 Mol.-% vorliegen, insbesondere in einem Anteil von 0,5 bis 5 Mol.-%.

Entsprechend zu den Diolen können auch Gemische von verschiedenen Hydroxycarbonsäurekomponente eingesetzt werden. Häufig wird man jedoch genau eine Hydroxycarbonsäurekomponente einsetzen (wobei Enantiomerengemische im Sinne dieser Anmeldung als "eine Hydroxycarbonsäurekomponente" gelten). Werden zwei verschiedene Enantiomere eingesetzt, können L- und D-Milchsäure beispielsweise mit L/D-Verhältnissen von 50/50, 75/25 und 80/20 eingesetzt werden.

Die Präpolymerisation gemäß Schritt B) kann in jeder geeigneten Vorrichtung für Veresterungsreaktionen durchgeführt werden.

Die Präpolymerisation gemäß Schritt B) kann in jeder geeigneten Vorrichtung für Veresterungsreaktionen durchgeführt werden.

Die Herstellung des Präpolymers gemäß Schritt B) erfolgt meist im geschmolzenen Zustand (insbesondere der Edukte), wobei gegebenenfalls gebildetes Wasser durch Einleiten trockenen Inertgases entfernt werden kann. Noch besser kann Wasser entfernt werden, indem die Reaktion bei vermindertem Druck erfolgt, was erfindungsgemäß in der Regel zumindest zeitweise erfolgt, wenn die Hydroxycarbonsäurekomponente nicht nur aus cyclischen Dimeren (wie z.B. Lactid) besteht. Wenn die Reaktion zumindest zeitweise bei vermindertem Druck durchgeführt wird, so wird im Regelfall in Schritt B) zunächst die Reaktion bei Normaldruck erfolgen, z.B. die ersten 10 bis 15 % der Gesamtreaktionsdauer. Der Druck wird dann üblicherweise nur allmählich reduziert, insbesondere um keine der Komponenten des Reaktionsgemischs (abgesehen vom Wasser) durch Verdampfung in großem Ausmaß aus diesem zu entfernen. Die Druckerniedrigung wird häufig in zumindest zwei Stufen durchgeführt, wobei zunächst eine (allmähliche) Druckerniedrigung auf 300 bis 600 mbar (beispielsweise 500 mbar) erfolgt und nachfolgend eine weitere Druckerniedrigung auf 10 bis 50 mbar (beispielsweise 20 mbar). Im Regelfall wird der Druck nicht niedriger als 10 mbar sein, häufig wird sogar die untere Grenze für den Druck bei 20 mbar liegen.

Wie bereits ausgeführt wurde, ist auch ein Katalysator für die Polyveresterung zugegen, wobei grundsätzlich jeder für eine Polyveresterung geeignete Katalysator eingesetzt werden kann. Nach dem Stand der Technik werden hierbei häufig Katalysatoren auf Zinn-Basis eingesetzt. Nachdem diese aber eine hohe Giftigkeit aufweisen, wird erfindungsgemäß bevorzugt, einen Katalysator auf Titan-, Zink- oder Zirkonium-Basis einzusetzen. Zu nennen sind beispielsweise Titan(IV)-isopropylat ($Ti(O^iPr)_4$), Titan(IV)-butylat ($Ti(OBu)_4$), Zinkacetylacetonat ($Zn(acac)_2$) und Zirkoniumacetylacetonat ($Zr(acac)_4$). Der Katalysator wird üblicherweise in Konzentrationen von bis zu 2 Gew.-% (bezogen auf die restlichen Komponenten, die in Schritt B) eingesetzt werden) eingesetzt, üblicherweise liegt er in Konzentrationen von 0,5 bis 1 Gew.-% vor.

Die Temperatur der Polyveresterung gemäß Schritt B) liegt üblicherweise zwischen 100°C und 220 °C. Normalerweise wird die Temperatur zu Beginn der Reaktion 100 bis 160 °C, häufig 120-160 °C, betragen und dann im Regelfall schrittweise erhöht. Die Temperaturerhöhung wird häufig in zumindest ein oder zwei Stufen durchgeführt, wobei in einem ersten Schritt eine (allmähliche) Temperaturerhöhung um 20-30 °C und in einem gegebenenfalls vorhandenen zweiten Schritt eine weitere Temperaturerhöhung um 20-30 °C erfolgen kann. Die Maximaltemperatur wird im Regelfall im Bereich von 160 bis 220°C, und insbesondere im Bereich von 180 bis 200 °C liegen. Temperaturen oberhalb von 220°C sind prinzipiell denkbar, allerdings ist hierbei zu beachten, dass sich dabei Lactone als Nebenprodukte bilden können, die unerwünscht sind.

Üblicherweise wird die Reaktion gemäß Schritt B) solange durchgeführt, bis die eine genügend niedrige Säurezahl und ein genügend hohes Molekulargewicht erreicht wird. Die Reaktionszeiten betragen häufig mindestens 6 Stunden, für besonders gute Ergebnisse können auch Reaktionszeiten von über 10 Stunden erforderlich werden.

Die Präpolymere gemäß Schritt B) werden üblicherweise eine zahlenmittlere Molmasse von 2000 bis 8000 g/mol (beispielsweise etwa 2000 bis 4500 g/mol). Die Polydispersität der Präpolymere wird im Regelfall zwischen 1,3 und 2,3 liegen (häufig zwischen 1,5 und 1,7).

Um die Eigenschaften des Rückgratpolymers maßschneidern zu können, kann eine Steuerung über die Dauer der Polymerisation (längere Reaktionszeiten führen zu höheren zahlenmittleren Molmassen) und durch die Menge zugesetzten Diols gesteuert werden. Häufig hat sich eine Menge von 2 mol-% der Diol-Komponente als sinnvoll erwiesen; dann kann durch die Länge der Reaktionsdauer trotzdem die mittlere Molmasse deutlich beeinflusst werden. Je länger die gebildeten Ketten des Präpolymers sind, desto weniger Diisocyanat ist in nachfolgendem Schritt C) notwendig, und das resultierende Polyesterurethan ist dann weicher.

Im Regelfall wird die Veresterung solange fortgesetzt, bis eine entsprechend niedrige Säurezahl erhalten wird. Die Säurezahl wird hierbei (wie stets im Rahmen der vorliegenden Anmeldung) nach DIN EN ISO 2114 bestimmt. Als sinnvoll haben sich Säurezahlen kleiner 50 mg/g erwiesen. Häufig werden noch bessere Ergebnisse erzielt, wenn die Säurezahl kleiner 30 mg/g und insbesondere wenn sie kleiner 10 mg/g ist. Die freie Säure kann die unerwünschte Bildung von zu Amiden, Carbonsäureanhydriden bewirken und damit auch unerwünschte Kristallisationseffekte hervorrufen. Werden jedoch die vorstehenden Angaben hinsichtlich Säurezahl eingehalten, so kann das Vernetzungsrisiko minimiert werden.

Im Regelfall wird die Glasübergangstemperatur der erhaltenen Präpolymere etwa 0 bis 40°C betragen, häufig wird sie im Bereich zwischen 10 und 30°C liegen. Wie bereits vorstehend ausgeführt wurde, haben die erfindungsgemäß eingesetzten vicinalen Diole den Effekt, dass die Glasübergangstemperatur signifikant gesenkt werden kann.

In einer alternativen Ausführungsform kann statt einer Polykondensation der Hydroxycarbonsäurekomponente in Gegenwart des vicinalen Diols auch eine Kondensation zu einem Polyhydroxycarbonsäurepolymer oder -oligomer unter den vorstehen genannten Bedingungen und erst nachfolgend eine Umsetzung mit einem Diol oder einem Reagenz, mit dem das Carboxy-terminale Ende des Polyhydroxycarbonsäurepolymers oder -oligomers zu einem Carbonsäureester abreagiert erfolgen. Diese Reagenz muss dann zusätzlich eine Hydroxygruppe oder einen Precursor hierfür enthalten, damit ein Präpolymer mit zwei terminalen OH-Gruppen entsteht.

In zum vorhergehenden Absatz analoger Weise kann auch ein Präpolymer mit zwei terminalen Carboxylat-Gruppen erzeugt werden. Herbei erfogt dann eine Umsetzung der Hydroxy-Gruppen des Polyhydroxycarbonsäurepolymers oder -oligomers mit einer Dicarbonsäure, einem Dicarbonsäureanhydrid oder einem Reagenz, mit dem das Hydroxy-terminale Ende des Polyhydroxycarbonsäurepolymers oder -oligomers zu einem Carbonsäureester abreagiert. Diese Reagenz muss dann zusätzlich eine Carboxygruppe oder einen Precursor hierfür enthalten, damit ein Präpolymer mit zwei terminalen Carboxy-Gruppen entsteht. Bei einem derartigen Präpolymer kann beispielsweise mit Polyolen und dergleichen eine Kettenverlängerung erfolgen.

Durchführung von Schritt C):
Wie bereits vorstehend erläutert wurde, sind hinsichtlich der für die Herstellung der Polyesterurethanen gemäß Schritt C) einzusetzenden Diisocyanate keine allzu großen Vorgaben zu beachten. Beispielsweise können folgende Diisocyanate oder Gemische derselben eingesetzt werden: 2,4-Toluoldiisocyanat (2,4-TDI), 2,6-Toluoldiisocyanat (2,6-TDI), Isophorondiisocyanat (IPDI), 4,4'-Diisocyanatodiphenylmethan (4,4'-MDI), 2,4'-Diisocyanatodiphenylmethan (2,4'-MDI), polymeres Diphenylmethandiisocyanat (pMDI), Hexamethylendiisocyanat (HMDI).

Der Verlauf der Kettenverlängerung wird durch die Menge an eingesetzten Diisocyanaten bestimmt. Wie vorstehend bereits erläutert, sind auch die terminalen Gruppen des gemäß Schritt B) hergestellten Präpolymers für den Kettenverlängerungsprozess von großer Bedeutung. Die Kettenverlängerungsreaktion zwischen annähernd äquimolaren Mengen an Diisocyanat und primären Hydroxyl-terminierten Präpolymeren verläuft sehr schnell. Die Addition von Diisocyanaten an sekundäre OH-Gruppen verläuft ohne Katalysator, aber vergleichsweise langsam.

Nachdem in dem gemäß Schritt B) erhaltenem Präpolymer im Regelfall noch Katalysator in ausreichender Menge vorhanden ist, muss für Schritt C) entsprechend kein zusätzlicher Katalysator mehr zugesetzt werden. Es wird dabei davon ausgegangen, dass im Regelfall das Präpolymer gemäß Schritt B) mindestens 50 % der ursprünglich eingesetzten Katalysatormenge enthalten dürfte.

Die Copolymerisation gemäß Schritt C) wird bei einer Temperatur von etwa 130 bis 240°C durchgeführt, üblicherweise zwischen 140 und 180°C. Die Copolymerisation gemäß Schritt C) kann auch bei vermindertem Druck erfolgen; insbesondere dann sind die vorstehend genannten Temperaturen von 140 bis 180°C sinnvoll.

Wie bereits im vorstehend beschriebenen Schritt B) kann auch in Schritt C) der Druck auf bis zu 10 mbar abgesenkt werden. Häufig wird der Druck aber nicht weniger als 20 mbar betragen. Ferner wird die Reaktion wie auch die Reaktion gemäß Schritt B) unter Schutzgasatmosphäre durchgeführt werden.

Die Copolymerisation gemäß Schritt C) wird bevorzugt in der Schmelze durchgeführt. Um dies zu erreichen, kann ein verminderter Druck nötig sein. In der Schmelze kann vorteilhaft ein Mixer zur Vermischung der Reaktionspartner eingesetzt werden.

Üblicherweise wird die Reaktion gemäß Schritt C) solange durchgeführt, bis die vollständige Umsetzung des Diisocyanats erfolgt ist. Die Reaktionszeiten betragen üblicherweise zwischen 20 Minuten und 3 Stunden, häufig werden Reaktionszeiten von 30 Minuten bis 2 Stunden geeignet sein.

Die zahlenmittlere Molmasse $M_n$ des hergestellten Polyesterurethans beträgt typischerweise 6.000 bis 50.000 und liegt häufig im Bereich 8.000 bis 20.000 g/mol. Die gewichtsmittlere Molmasse $M_w$ beträgt typischerweise 6.000 bis 70.000 g/mol und häufig 10.000 bis 50.000 g/mol. Die Polydispersität beträgt üblicherweise zwischen 1,5 und 2,5, insbesondere 1,8 bis 2,2. Die gewichtsmittlere und die zahlenmittlere Molmasse werden (wie stets im Rahmen der vorliegenden Anmeldung) mittels Gelpermeationschromatografie in 1,1,1,3,3,3-Hexafluorisopropanol ermittelt. Die Kalibrierung erfolgt hierbei mittels PMMA-Standards.

Die Glasübergangstemperaturen der Polyesterurethane sind gegenüber denen der Präpolymere gemäß Schritt B) etwas erhöht und betragen im Regelfall 30 bis 60°C; häufig liegen sie zwischen 40 und 55°C. Glasübergangstemperaturen und Schmelzpunkte werden (wie stets im Rahmen der vorliegenden Anmeldung) mittels DSC unter schwachem Stickstoffstrom in Aluminiumpfännchen ermittelt, wobei die Aufheizrate 10 K/min beträgt.

Nachdem die Herstellung des erfindungsgemäßen Polyesterurethans vorstehend detailliert erläutert wurde, soll nachfolgend nochmals angegeben werden, welche chemische Struktur die mit den im vorstehend beschriebenen Verfahren erhaltenen Polyesterurethane aufweisen. Unabhängig von den kennzeichnenden Merkmalen des Hauptanspruchs kann daher das erfindungsgemäße Polyesterurethan folgendermaßen beschrieben werden: Das Polyesterurethan weist (veresterte) Poly-α-hydroxycarbonsäure- und/oder Poly-β-hydroxycarbonsäure-Einheiten auf, daneben weist es, auf die vicinale Diol-Komponente zurückzuführen Ester-Gruppen und schließlich auf die Diisocyanate zurückzuführende Polyurethan-Gruppen auf. Weitere funktionelle Gruppen sind im Regelfall nicht enthalten. Mit anderen Worten kann das erfindungsgemäße Polyesterurethan beschrieben werden als Copolymer aus Poly-α-hydroxycarbonsäure-Einheiten und/oder Poly-β-hydroxycarbonsäure-Einheiten, die über einen Linker L miteinander verbunden sind, wobei für L gilt, dass dieser ausgewählt sein kann aus einer der folgenden Gruppierungen:

O*-C(O)-N-R-N-C(O)-O* oder
O*-C(O)-N-R-N-C(O)-A oder
A-C(O)-N-R-N-C(O)-A.

Hierin steht A für O**-CH(R')-CH(R")-O**, wobei eines der beiden mit O** bezeichneten Sauerstoff-Atome an die Gruppe C(O)-N-R-N-C(O) gebunden ist und das andere mit O** bezeichnete Sauerstoff-Atom eines der beiden terminalen Enden des in Schritt B) hergestellten Präpolymers. Entsprechendes gilt, wenn das vicinale Diol tertiäre Alkoholgruppen enthält.

Die mit O* bezeichneten Sauerstoff-Atome stellen ebenfalls die Sauerstoff-Atome eines der beiden terminalen Enden des in Schritt B) hergestellten Präpolymers dar.

R, R' und R" sind wie oben erläutert definiert.

Der Aspekt, der Klebstoffformulierung zwar keinen Kautschuk zuzufügen aber stattdessen eine Klebstoffformulierung mit einem Basispolymer einzusetzen, das das erfindungsgemäße Polyesterurethan enthält oder hieraus besteht, stellt einen eigenständigen dritten Aspekt der vorliegenden Anmeldung dar. So stellen sich die vorteilhaften Eigenschaften des erfindungsgemäßen Polyesterurethans (auf Basis eines vicinalen Diols mit mindestens einer sekundären oder tertiären Hydroxygruppe) bei jeder Klebstoffzusammensetzung ein. Allerdings können bei Klebstoffzusammensetzungen die vorteilhaften Eigenschaften des erfindungsgemäßen Polyesterurethans durch gleichzeitige Verwendung mit einem Kautschuk - wie im ersten Aspekt der Erfindung erläutert - noch verbessert werden.

Gemäß einem vierten Aspekt der Erfindung erfolgt die Funktionalisierung der polykondensierten Hydroxycarbonsäurekomponente zu einem Polymer, das im Wesentlichen keine freien Carboxylatgruppen mehr enthält sondern stattdessen Estergruppen, nicht während der Polykondensation der Hydroxycarbonsäure sondern erst nach Herstellung einer polykondensierten Hydroxycarbonsäure, insbesondere nach Erhalt einer oligomeren Milchsäure. Hierbei kann beispielsweise auch eine Reaktion der freien Carboxylat- und/oder Hydroxygruppen zu Estergruppen durch eine Umsetzung der polykondensierten Hydroxycarbonsäurekomponente mit einem Diepoxid durchgeführt werden, wobei eine Ringöffnung und eine damit einhergehende Kettenverlängerung erfolgt.

Durch das Diepoxid kann insbesondere eine Kettenverlängerung mit Segmenten erfolgen, die ein gewichtsmittleres Molekulargewicht im Bereich von 200 bis 20000 g/mol, insbesondere 500 bis 15000 g/mol, beispielsweise 2500 bis 8000 g/mol, aufweisen.

So kann beispielsweise oligomere Milchsäure mit JONCRYL4368-CS, erhältlich von der Firma BASF SE, umgesetzt werden. Hierbei handelt es sich um ein multifunktionales epoxidiertes Reaktivpolymer auf Basis von Acrylat/Styrol-Copolymeren, das speziell für die Anwendungen von PLA und PET in der Lebensmittelindustrie formuliert wurde (EU/FDA-Zulassung; FDA: Food and Drug Administration). JONCRYL4368-CS ist ein polymerer Kettenverlängerer mit einer gewichtsmittleren Molmasse $M_w$ von 6800 g/mol und einem Äquivalentgewicht der Epoxidgruppen von 285 g/mol. Durch die Umsetzung mit JONCRYL4368-CS kann die hydrolytische Stabilität erhöht werden.

Die mittels dieser Variante hergestellten Polymere können in einer Klebstoffzusammensetzung eingesetzt werden, die neben dem Polymer noch ein Tackifier/Weichmachersystem enthalten (beispielsweise aus einem Kohlenwasserstoffharz und einem Citrat). Die Klebstoffzusammensetzung enthält dann also ein Basispolymer, das als Hauptbestandteil ein Polyesterurethan aufweist oder das aus diesem Polyesterurethan besteht, und daneben einen Weichmacher und/oder einen Tackifier. Für die Definition von Hauptbestandteil, Tackifier und Weichmacher gilt das im Dritten Aspekt Ausgeführte (mit dem Unterschied, dass an die Stelle des Polyesterurethans das vorstehend erläuterte Polymer tritt und umgekehrt). Die Klebstoffzusammensetzung nach dem vierten Aspekt weist hohe Festigkeiten bei gleichzeitig guter Flexibilität auf und kann in gleicher Weise wie Klebstoffzusammensetzungen nach dem zweiten und dritten Aspekt verwendet werden.

Alternativ kann gemäß dem vierten Aspekt zur Kettenverlängerung auch eine Reaktion der freien Carboxylat- und/oder Hydroxygruppen zu Estergruppen durch eine Umsetzung der polykondensierten Hydroxycarbonsäurekomponente mit einer Poly($\beta$-hydroxyalkansäure) (beispielsweise Poly($\beta$-hydroxybuttersäure)), einem Polyester aus einem Diol und einer Dicarbonsäure (beispielsweise Polybutylensuccinat) oder einem Polyol erfolgen. Als polykondensierte Hydroxycarbonsäurekomponente kann hierbei sowohl eine polymere oder oligomere Verbindung mit genau einer terminalen OH- und genau einer terminalen Carboxy-Gruppe, als auch solche mit zwei Carboxy-Gruppen (insbesondere im Fall der Polyole) oder zwei OH-Gruppen eingesetzt werden. Dabei kann neben der direkten Veresterung im Fall der Poly($\beta$-hydroxyalkansäure) und des Polyesters aus einem Diol und einer Dicarbonsäure auch eine Umesterung erfolgen. Aus Nachhaltigkeitsgesichtspunkten ist die Umsetzung der polykondensierten Hydroxycarbonsäurekomponente mit Poly(3-Hydroxybutyrat-co-3-Hydroxyhexanoat) und Polybutylensuccinat besonders interessant.

Ein fünfter Aspekt der vorliegenden Erfindung betrifft die Verwendung der erfindungsgemäßen Klebstoffzusammensetzung. Insbesondere die erfindungsgemäße Klebstoffzusammensetzung nach dem zweiten und dritten Aspekt der Erfindung ermöglicht eine vielfältige Verwendung. Insbesondere lässt sich dieser Klebstoff in der Holz- und Möbelverarbeitung bzw. in der Holz- und Möbelindustrie, in der Transport- und Bauindustrie, in der Textilindustrie, in der Hygieneindustrie (z.B. Herstellung von Windeln, Binden und dergleichen), in der Papierverarbeitungs- und Papierverpackungsindustrie (z.B. Herstellung bzw. Verarbeitung von Klebeetiketten, Klebebänder, Papier- und/oder Kartonverpackungen, wie beispielsweise Lebensmittelverpackungen, Lebensmittel-Direkt-Etikettierungen und dergleichen) sowie im Montagebereich einsetzen.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird nachfolgend noch anhand von Figuren und mehreren Beispielen näher erläutert.

I. Polymilchsäure-Präpolymer und Polyesterurethan

Beispiel 1 - Herstellung von Oligomilchsäure-Präpolymer (Vergleichsbeispiel)

In einem Dreihalskolben (500 mL) ausgestattet mit einem KPG-Rührer, Reduzierstück, Vigreux-Kolonne, Destillierbrücke, Vorlage und einer Kühlfalle werden 3,3308 mol wasserfreier L-Milchsäure unter Stickstoff auf 130 °C erhitzt. Wenn die Temperatur erreicht wird, wird 0,5 w-% bezogen auf die Menge der Milchsäure $ZnCl_2$ in Toluol als Katalysator zugegeben und das Reaktionsgemisch 1 Stunde unter Stickstoff gerührt. Als Stabilisator wurde Ultranox 626 (1 Gew.-% bezogen auf das Präpolymer) eingesetzt. Dann wird die Temperatur auf 150 °C erhöht und nach dem die Temperatur erreicht wird, wird der Druck langsam auf 20 mbar abgesenkt. Nach zwei Stunden wird Die Temperatur auf 180°C erhöht. Die gesamte Reaktionszeit beträgt 24h.

Ausbeute: 95 % (bezogen auf die Gesamtmasse); $M_n$=3900 g/mol, $M_w$=7400 g/mol, Polydispersität=1,9; Säurezahl (SZ) = 10 mg/g KOH, OH-Zahl (OHZ) = 45 mg/g; $T_g$=36,7°C; $T_c$=107°C; $T_m$=136°C

Beispiel 2 - Herstellung von Oligomilchsäure-Präpolymer (Vergleichsbeispiel)

Die Reaktion wird wie in Beispiel 1 durchgeführt, im Unterschied hierzu werden aber 3,33 mol wasserfreier DL-Milchsäure (Verhältnis: 80% L-Milchsäure / 20% D-Milchsäure), 1 Gew.-% (bezogen auf die Menge der Milchsäure) Zirkonium(IV)-Acetylacetonat (Zr(acac)$_4$) in Toluol als Katalysator und als Stabilisator Irganox 1010 (Gew.-% bezogen auf das Präpolymer) eingesetzt.

Ausbeute: 97 % (bezogen auf die Gesamtmasse); $M_n$=4800 g/mol, $M_w$=8500 g/mol, Polydispersität=1,72; Säurezahl (SZ) = 10 mg/g KOH, OH-Zahl (OHZ) = 23 mg/g; $T_g$=31,5°C

Beispiel 3 - Herstellung von Oligomilchsäure-Präpolymer (Vergleichsbeispiel)

Die Reaktion wird wie in Beispiel 2 durchgeführt, im Unterschied hierzu werden aber 3,33 mol wasserfreier DL-Milchsäure (Verhältnis: 50% L-Milchsäure / 50% D-Milchsäure) eingesetzt.

Ausbeute: 97 % (bezogen auf die Gesamtmasse); Mn=5300 g/mol, Mw=9000 g/mol, Polydispersität=1,75; Säurezahl (SZ) = 10 mg/g KOH, OH-Zahl (OHZ) = 23 mg/g; Tg=29,7°C

Beispiele 4 bis 21 - Herstellung von OH-terminiertem Oligomilchsäure-Präpolymer

Die Reaktion wird nach einer der nachfolgenden Verfahrensvarianten durchgeführt. Die konkreten Edukte und Verfahrensbedingungen sind in Tabelle 1 aufgeführt.

Allgemeines Verfahren A:

Teilschritt (i): wie in Beispiel 1 werden 3,33 mol wasserfreier Milchsäure (im in Tabelle 1 angegebenen Isomerenverhältnis) und das Diol unter Stickstoff auf 130 °C erhitzt. Wenn die Temperatur erreicht wird, wird der Katalysator (in Toluol) zugegeben und das Reaktionsgemisch 1 Stunde unter Stickstoff gerührt.
Teilschritt (ii): Dann wird die Temperatur auf 150 °C erhöht und nach dem die Temperatur erreicht wird, wird der Druck langsam auf 20 mbar abgesenkt.

Wie in allen nachfolgend angegebenen allgemeinen Verfahren bezieht sich die Menge des Diols und die Menge des Katalysators auf die Menge eingesetzter Milchsäure.

Allgemeines Verfahren B:

Teilschritt (i): wie in Verfahren A
Teilschritt (ii) wie in Verfahren A; Dauer: 2 Stunden
Teilschritt (iii) Dann erfolgt eine weitere Temperaturerhöhung auf 180°C.

Allgemeines Verfahren C:

Teilschritt (i): wie in Verfahren A, allerdings wird auf 150 °C erhitzt.
Teilschritt (ii): Die Temperatur wird innerhalb von 3 h schrittweise auf 200 °C erhöht und der Druck auf 100 mbar eingestellt. Anschließend wird das Reaktionsgemisch für eine weitere Stunde bei 200 °C und unter 50 mbar gerührt.

Allgemeines Verfahren D:

Teilschritt (i): wie in Verfahren A
Teilschritt (ii): Die Temperatur wird auf 160 °C erhöht und nach dem die Temperatur erreicht wird, wird der Druck langsam auf 20 mbar abgesenkt und 2h gehalten.
Teilschritt (iii): Dann erfolgt eine weitere Temperaturerhöhung auf 180°C.

Allgemeines Verfahren E:

Teilschritt (i): wie in Beispiel 1 werden 3,33 mol wasserfreier Milchsäure (im in Tabelle 1 angegebenen Isomerenverhältnis) und das Diol unter Stickstoff auf 160 °C erhitzt und für 75 Minuten bei dieser Temperatur gehalten. Dann wird der Katalysator (in Toluol) zugegeben und weitere 90 Minuten bei dieser Temperatur gerührt.

Teilschritt (ii): Anschließend wird der Druck langsam auf 500 mbar vermindert und das Reaktionsgemisch 0,5 h bei diesen Bedingungen gehalten. Danach folgt eine weitere Drucksenkung auf 20 mbar; das Gemisch wird dann 1 h bei 160 °C gerührt. Teilschritt (iii): Dann erfolgt eine weitere Temperaturerhöhung auf 180°C.

Tabelle 1:

| Beispiel | Verfahren | Diol | Milchsäure Isomer | Menge Diol [mol %] | Katalysator (Kat.) | Menge Kat. [Gew.-%] | Gesamtreaktionszeit |
|---|---|---|---|---|---|---|---|
| 4 | A | 1,4-Butandiol | D/L 0/100 | 2 | $Zr(acac)_4$ | 0,5 | 8 h |
| 5 | B | 1,4-Butandiol | D/L 50/50 | 2 | $Zr(acac)_4$ | 1 | 24 h |
| 6 | C | 1,4-Butandiol | D/L 50/50 | 2 | $Zn(acac)_4$ | 1 | 5 h |
| 7 | C | 1,4-Butandiol | D/L 20/80 | 2 | $Zn(acac)_4$ | 1 | 5 h |
| 8 | B | 1,4-Butandiol | D/L 20/80 | 2 | $Zn(acac)_4$ | 1 | 7 h |
| 9 | B | 1,4-Butandiol | D/L 20/80 | 2 | $Ti(OBu)_4$ | 0,5 | 8 h |
| 10 | D | 1,4-Butandiol | D/L 20/80 | 2 | $Ti(OBu)_4$ | 0,5 | 9 h |
| 11 | B | 1,4-Butandiol | D/L 20/80 | 4 | $Ti(OBu)_4$ | 0,5 | 8 h |
| 12 | B | 2-Ethyl-1,3-Hexandiol | D/L 20/80 | 2 | $Ti(O^iPr)_4$ | 0,5 | 8 h |
| 13 | B | 2-Ethyl-1,3-Hexandiol | D/L 20/80 | 2 | $Ti(O^iPr)_4$ | 0,5 | 11 h |
| 14 | B | Trimethylolproan | D/L 20/80 | 2 | $Ti(OBu)_4$ | 0,5 | 8 h |
| 15 | B | 1,2-Hexandiol | D/L 20/80 | 2 | $Ti(^iOPr)_4$ | 0,5 | 8 h |
| 16 | B | 1,2-Hexandiol | D/L 20/80 | 2 | $Ti(OBu)_4$ | 0,5 | 8 h |
| 17 | B | 1,2-Hexandiol | D/L 20/80 | 2 | $Ti(OBu)_4$ | 0,5 | 14 h |
| 18 | E | 1,2-Hexandiol | D/L 20/80 | 2 | $Ti(OBu)_4$ | 0,5 | 15 h |
| 19 | B | 1,2-Hexandiol | D/L 20/80 | 2 | $Ti(OBu)_4$ | 0,5 | 17 h |
| 20 | B | 1,2-Hexandiol | D/L 20/80 | 2 | $Ti(OBu)_4$ | 0,5 | 21 h |
| 21 | B | 1,2-Hexandiol | D/L 20/80 | 2 | $Ti(acac)_2(O^iPr)_2$ | 0,5 | 11 h |

Die nach derart erhaltenen Präpolymere haben die Kenngrößen gemäß Tabelle 2.

Tabelle 2:

| Beispiel | Ausbeute [%] | $M_n$ [g/mol] | $M_w$ [g/mol] | Polydispersität | Säurezahl (SZ) [mg/g KOH] | OH-Zahl (OHZ) [mg/g] | $T_g$ [°C] |
|---|---|---|---|---|---|---|---|
| 4 | 95 | 2000 | 3500 | 1,75 | 25 | 45 | 14 |
| 5 | 97 | 2000 | 3500 | 1.75 | 25 | 45 | 14 |
| 6 | 80 | 1700 | 2700 | 1,60 | | 62 | 27,6 |
| 7 | 86 | 1400 | 2400 | 1,68 | | 80 | 29 |
| 8 | 80 | 2200 | 3800 | 1,76 | | 51 | 28,5 |
| 9 | 78 | 2800 | 4400 | 1,54 | | 45 | 20 |
| 10 | 78 | 2400 | 3700 | 1,54 | 40 | 50 | 18 |
| 11 | 79 | 2200 | 3800 | 1,69 | 30 | 46 | 15 |
| 12 | 66 | 2400 | 3500 | 1,44 | | 23 | 27,4 |
| 13 | 66 | 5000 | 8800 | 1,78 | | 23 | 31,4 |
| 14 | 79 | 2600 | 3700 | 1,39 | | 43 | 22,5 |
| 15 | 72 | 6200 | 10000 | 1,59 | | 18 | 31,4 |
| 16 | 79 | 3700 | 5500 | 1,49 | 7 | 30 | 22 |
| 17 | 79 | 3500 | 5600 | 1,57 | 17 | 32 | 25,4 |
| 18 | 74 | 4400 | 7000 | 1,58 | 7 | 49 | 28 |
| 19 | 91 | 4600 | 7200 | 1,50 | 8 | 46 | 27 |
| 20 | 79 | 4100 | 5700 | 1,65 | 13 | 48 | 21,4 |
| 21 | 79 | 2900 | 4700 | 1,60 | | 40 | 22,3 |

Beispiele 22 - 39 - Herstellung von Polyesterurethan

Die Reaktion wird nach einer der nachfolgenden Verfahrensvarianten durchgeführt. Die konkreten Edukte, Verfahrensbedingungen und Kenngrößen der erhaltenen Polyesterurethane sind in Tabelle 3 aufgeführt.

Allgemeines Verfahren F:

Das OH-terminierte Oligomilchsäure-Präpolymer wird bei Unterdruck (20 mbar) bei 150 bis 160 °C aufgeschmolzen. Nach dem Aufschmelzen wird der Unterdruck aufgehoben und die berechnete äquimolare Menge des Diisocyanats tropfenweise unter Argon als Schutzatmosphäre zugeführt. Die gesamte Zutropfzeit beträgt 50 Minuten. Nach der Zugabe von isMDI wird das Gemisch bis zum Erreichen der Gesamtreaktionszeit bei 150 bis 160 °C weitergerührt.

Allgemeines Verfahren G:

Durchführung wie in Verfahren F. Allerdings beträgt die Zutropfzeit 5 bis 10 Minuten (nur in Beispiel 27 15 Minuten und in Beispiel 30 und x: 20 Minuten).

Allgemeines Verfahren H:

Durchführung wie in Verfahren F. Allerdings wird bei 160 °C und 20 mbar aufgeschmolzen und die Zutropfzeit beträgt 40 Minuten

Allgemeines Verfahren I:

Durchführung wie in Verfahren H. Allerdings beträgt die Zutropfzeit 150 bis 160 Minuten (nur in Beispiel 34: 220 Minuten).

Allgemeines Verfahren J:

Durchführung wie Verfahren K. Allerdings wird bei 140 bis 150 °C aufgeschmolzen und erst nach Zutropfen des Diisocyanats die Temperatur erhöht.

Allgemeines Verfahren K:

Das OH-terminierte Oligomilchsäure-Präpolymer wird bei Unterdruck (20 mbar) bei 130 °C aufgeschmolzen. Nach dem Aufschmelzen wird der Unterdruck aufgehoben und die berechnete äquimolare Menge des Diisocyanats tropfenweise unter Argon als Schutzatmosphäre zugeführt. Nach 10 Minuten der Dosierung wird die Temperatur auf 180 °C erhöht und es erfolgt gleichzeitig eine weitere Dosierung des TMDI unter Argon. Die gesamte Zutropfzeit beträgt 15 bis 20 Minuten. Nach der Zugabe des Diisocyanats wird das Reaktionsgemisch bis zum Erreichen der Gesamtreaktionszeit bei 180 °C unter Argon weitergerührt.

Allgemeines Verfahren L:

Das OH-terminierte Oligomilchsäure-Präpolymer wird bei Unterdruck (20 mbar) bei 170 °C aufgeschmolzen. Dann wurden 2 Tropfen Ti(OBu)$_4$ zugegeben und bei Unterdruck (20 mbar) ca. 30 min lang bei 170 °C Vakuum gerührt. Danach wird der Unterdruck aufgehoben und die berechnete äquimolare Menge des Diisocyanats tropfenweise unter Argon als Schutzatmosphäre zugeführt. Die gesamte Zutropfzeit beträgt 40 Minuten.

Tabelle 3:

| Beispiel | Verfahren | Präpolymer aus Beispiel | Diisocyanat* | Gesamtreaktionszeit | Ausbeute [%] | $M_n$ [g/mol] | $M_w$ [g(mol] | Polydispersität | $T_g$ [°C] |
|---|---|---|---|---|---|---|---|---|---|
| (22)[a] | F | 4 | MDI | 40 min | 97 | 3100 | 5800 | 1,85 | 53,9 |
| (23)[a] | F | 5 | MDI | 20 min | 97 | 2700 | 4800 | 1,75 | 17,2 |
| (24)[a] | H | 6 | isMDI | 50 min | 99 | 3600 | 6500 | 1,8 | 46,8 |
| (25)[a] | F | 7 | isMDI | 1 h | 99 | 6400 | 12800 | 2,01 | 58,3 |
| (26)[a] | K | 8 | TMDI | 2,5h | 99 | 3400 | 5800 | 1,72 | 23,8 |
| (27)[a] | G | 9 | isMDI | 30 min | 99 | 7200 | 13200 | 1,83 | 52,1 |
| (28)[a] | G | 10 | isMDI | 30 min | 99 | 4800 | 8700 | 1,80 | 49,7 |
| (29)[a] | G | 11 | isMDI | 30 min | 99 | 8500 | 17300 | 2,03 | 56,9 |
| 30 | G | 12 | isMDI | 2 h | 99 | 7000 | 12600 | 1,98 | 59,1 |
| 31 | J | 13 | isMDI | 2 h | 99 | 14300 | 47900 | 3,35 | 50,9 |
| (32)[a] | G | 14 | isMDI | 30 min | 99 | 3300 | 6700 | 2,04 | 33,8 |
| 33 | J | 15 | isMDI | 135 min | 99 | 18500 | 49600 | 2,69 | 50,1 |
| 34 | G | 16 | isMDI | 20 min | 99 | 10700 | 23300 | 2,18 | 52,5 |
| 35 | L | 17 | isMDI | 70 min | 99 | 12000 | 24600 | 2,47 | 54,2 |
| 36 | G | 18 | isMDI | 2h | 99 | 16200 | 34400 | 2,13 | 51,2 |
| 37 | I | 19 | isMDI | 3 h | 99 | 19500 | 43100 | 2,21 | 53,2 |
| 38 | I | 20 | isMDI | 4 h | 99 | 14700 | 30800 | 2,09 | 53,3 |
| 39 | H | 21 | isMDI | 70 min | 99 | 7000 | 12900 | 1,85 | 54,8 |

[a]) nicht anspruchsgemäß *) MDI = Diphenylmethandiisocyanat, DESMODUR®44M (Bayer Material-Science AG, NCO-Gehalt ca. 33,6 Gew.-%) wird nicht zugetropft sondern als Festsotff zugegeben

isMDI = Diphenylmethandiisocyanat mit hohem Anteil des 2,4'-Isomeren, DESMODUR®2460M (Bayer MaterialScience AG, NCO-Gehalt ca. 33,6 Gew.-%)

TMDI = 1:1-Gemisch von 2,2,4- und 2,4,4-Trimethylhexamethylendiisocyanat, VESTANAT®TMDI (Evonik Industries, NCO-Gehalt ca. 40 Gew.-%) in Toluol

## II. Klebstoffzusammensetzungen

### 11.1 Klebstoffe mit Rückgratpolymeren ohne Polyesterurethan (Vergleichsbeispiele):

### Beispiel 40

Oligomere Milchsäure ($M_n$ 3700 g/mol, $M_w$=6900 g/mol, Polydispersität=1,84; hergestellt wie in Beispiel 2 aber mit Ti(Bu)$_4$ als Katalysator) wird bei 180°C aufgeschmolzen. Nach dem Aufschmelzen wird mit JONCRYL4368-CS unter Argon als Schutzatmosphäre zugeführt. Die Konzentration von JONCRYL4368-CS betrug 2,5 bzw. 5 Gew.-% bezogen auf die Menge der oligomeren Milchsäure. Die gesamte Reaktionszeit beträgt 90 min.

Mittels GPC wurden die Molmassen der erhaltenen Polymere und deren Molmassenverteilungen bestimmt. Die mittels GPC aufgenommenen Elugramme zeigen eine bimodale Verteilung. Die Molmassenverteilung ist mit 2,97 und 4,3 entsprechend breit. Neben dem höhermolekularen Anteil wiesen die hergestellten Muster einen Anteil an niedermolekularen Verbindungen auf. Die Molmassen $M_n$ liegen bei den hochmolekularen Anteilen beider Muster bei 46300 und 43000 g/mol und $M_w$ bei 60600 und 63000 g/mol. Der niedermolekulare Anteil weist $M_n$-Werte von 3900 und 3600 g/mol sowie $M_w$-Werte von 6300 g/mol und 5700 g/mol auf. Die Werte des niedermolekularen Anteils entsprechen den Werten der Ausgangsmaterialen. Die Gesamtmolmassen der beiden Muster waren $M_n$ 4660 g/mol und 4660 g/mol sowie $M_w$ 11400 und 20400 g/mol. Die Produkte nach der Umsetzung sind amorphe Materialien mit einem $T_g$ von 35 °C.

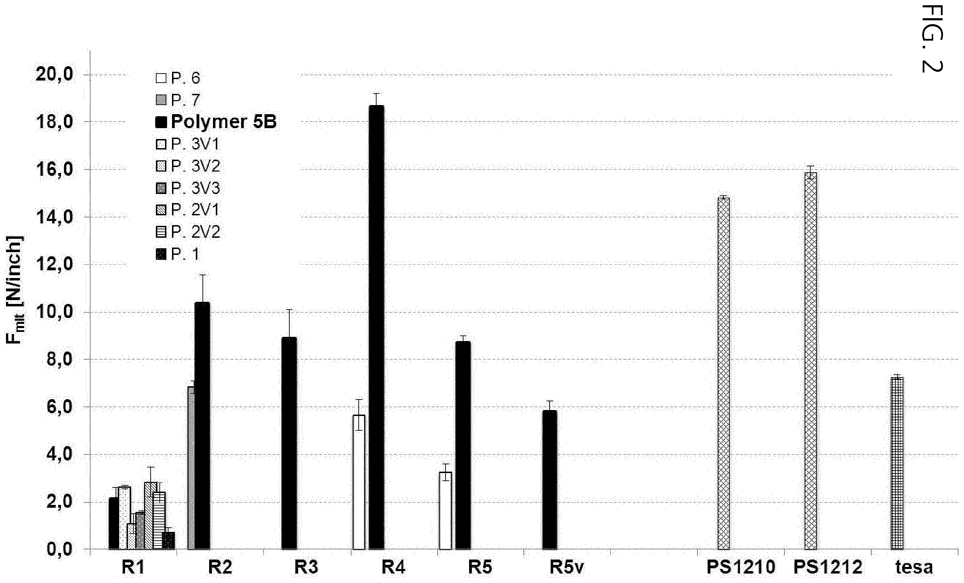

Durch die Modifikation mit JONCRYL wird, insbesondere bei einem Anteil von 5 Gew.-%, ein positiver Einfluss auf die Eigenklebrigkeit der Klebstoffformulierung beobachtet. Als Klebstoffformulierung wurde neben 25 Gew.-% des Polymers 45 Gew.-% Kohlenwasserstoffharz, 30 Gew.-% Citrat und 1 Gew.-% Antioxidans eingesetzt. Die Formulierungen der Polymere mit unterschiedlichem JONCRYL-Anteil wurden anhand des 180°-peel-Tests auf ihre Klebfestigkeit untersucht. Das Ergebnis der Formulierung des Polymers mit dem höheren Anteil zeigt sowohl einen Wert im Referenz-Bereich (siehe Figur 2), als auch ein verbessertes Bruchbild. Bei beiden Formulierungen der JONCRYL-Polymere ist ferner zu einem sehr großen Anteil Kohäsionsbruch festzustellen. Im Fall der Referenz liegt dagegen ausschließlich Adhäsionsbruch vor.

### Beispiel 41

In einem Dreihalskolben, ausgestattet mit einer Destillationsbrücke, einer Gaseinleitung, einer Vorlage, einem Blasenzähler (oder Kühlfalle) und einem Magnetrührer mit Ölbad, wurde Polymilchsäure ($M_n$ 3600 g/mol; hergestellt wie in Beispiel 2 aber mit Ti(Bu)$_4$ als Katalysator) mit Poly(3-Hydroxybutyrat-co-3-Hydroxyhexanoat) im Verhältnis 50:50 und mit 0,5 Gew.-% Zr(acac)$_4$ als Katalysator geschmolzen. Die Reaktion wurde 8 h unter Stickstoffatmosphäre oder Vakuum durchgeführt.

Der unter Stickstoffatmosphäre hergestellte Copolyester aus Polymilchsäure und Poly(3-Hydroxybutyrat-co-3-Hydroxyhexanoat) wies eine Polydispersität von 3,17 und eine bimodale Verteilung, eine Molmasse $M_n$ von 4200 g/mol und eine Molmasse $M_w$ von 13400 g/mol auf. Der Copolyester, der im Vakuum hergestellt wurde, hat eine Molmasse $M_n$ von 3800 g/mol, $M_w$ von 10700 g/mol und eine Polydispersität von 2,82.

Als Klebstoffformulierung wurde neben 25 Gew.-% des Polymers 45 Gew.-% Kohlenwasserstoffharz, 30 Gew.-% Citrat und 1 Gew.-% Antioxidans eingesetzt.

### Beispiel 42

Die Reaktion wird wie in Beispiel 41 durchgeführt, allerdings wird statt Poly(3-Hydroxybutyrat-co-3-Hydroxyhexanoat) Polybutylensuccinat eingesetzt.

Der Copolyester ist ein teilkristallines Polymer mit einem Glasübergang bei - 13,4 °C. Ein einzelner Glasübergang deutet darauf hin, dass die amorphen Segmente gut verträglich sind, was zur Ausbildung einer gemischten amorphen Phase geführt haben könnte. Der Schmelzpunkt des Copolymers wurde bei 82 °C bestimmt.

Als Klebstoffformulierung wurde neben 25 Gew.-% des Polymers 49 Gew.-% Kohlenwasserstoffharz und 26 Gew.-% Citrat eingesetzt. Zur Beurteilung der Eigenklebrigkeit der Haftschmelzklebstoffe wurde der Loop Tack bestimmt. Es konnten bereits zufriedenstellende Werte erreicht werden.

### Beispiel 43

In einem Dreihalskolben, ausgestattet mit einer Destillationsbrücke, einer Gaseinleitung, einer Vorlage, einen Blasenzähler (bzw. Kühlfalle) und einen Magnetrührer mit Ölbad, wurde Polymilchsäure ($M_n$ 3600 g/mol; hergestellt wie in Beispiel 2 aber mit Ti(Bu)$_4$ als Katalysator) oder modifizierte Polymilchsäure mit zwei Carboxy-terminalen Enden (hergestellt durch Kondensation von Milchsäure mit 2 mol-% Adipinsäure) und Polyol im Gewichtsverhältnis 4:1 sowie

Zr(acac)$_4$ oder Zn(acac)$_2$ als Katalysator geschmolzen und 8 h unter Stickstoffatmosphäre gerührt. Als Polyol können Polyethylenglycole und Polypropylenglycole eingesetzt werden.

Als Klebstoffformulierung wurde neben 25 Gew.-% des Polymers 49 Gew.-% Kohlenwasserstoffharz und 26 Gew.-% Citrat eingesetzt. Zur Beurteilung der Eigenklebrigkeit der Haftschmelzklebstoffe wurde der Loop Tack bestimmt. Es konnten bereits zufriedenstellende Werte erreicht werden.

II.2 Klebstoffe auf Basis von Polyesterurethanen:

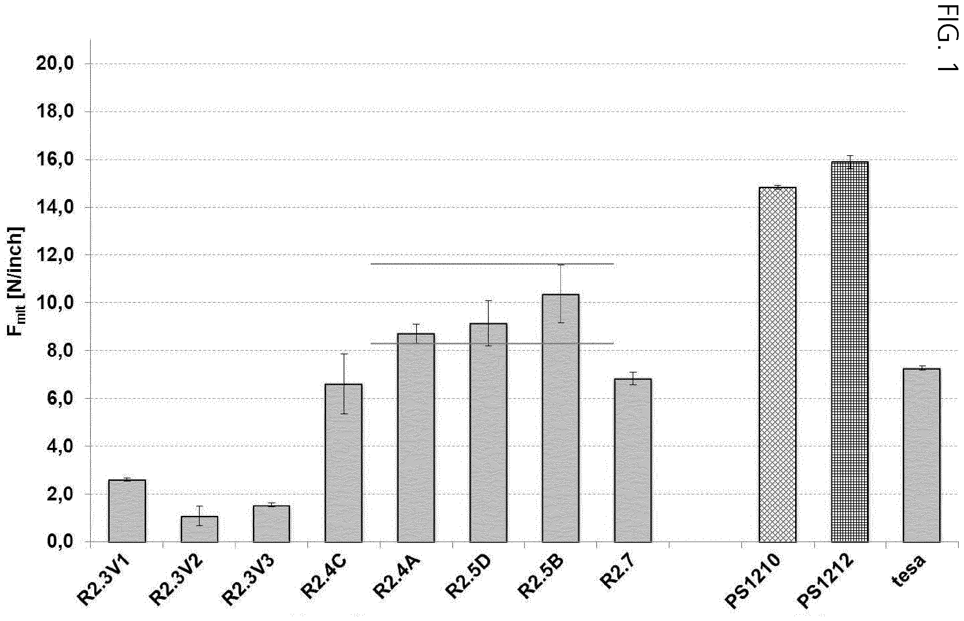

Anhand von sieben Rezeptur-Beispielen wird die Erfindung sowohl hinsichtlich der Rohstoffe als auch der Formulierungen verdeutlicht. Der Beurteilung liegen die Ergebnisse des 180°-peel-Tests nach FTM 1 zugrunde (Figuren 1 bis 3) ergänzt durch Viskositätsangaben bei 140°C aus DMA-Messungen. Das für Haftklebstoffe relevante Dahlquist-Kriterium des Speichermoduls G' ≤ 3 * 105 Pa bei 25°C und 1 Hz wird von allen getesteten Klebstoffformulierungen erfüllt. Die Werte bei den genannten Randbedingungen liegen mindestens bei 1,53 * 103 Pa und maximal bei 2,47 * 105 Pa.

Die in der nachfolgenden Tabelle 4 als Basispolymere X aufgeführten Polyesterurethane und im Vergleich dazu reine PLA wurden zu Klebstoffzusammensetzungen weiterverarbeitet:

Tabelle 4: verwendete Basispolymere:

| Basispolymer X | Herstellung gemäß Beispiel | M$_n$ [g/mol] |
|---|---|---|
| 1 [a] | 1 | 3900 |
| 1V1 [a] | 22 | 3100 |
| 2V1 [a] | 2 | 4800 |
| 2V2 [a] | 3 | 5300 |
| 3V1 [a] | 25 | 6400 |
| 3V2 [a] | 24 | 3600 |
| 3V3 [a] | 23 | 2700 |
| 3V4 [a] | 26 | 3400 |
| 4A | 30 | 7000 |
| 4C | 31 | 14300 |
| 5A | 39 | 7000 |
| 5B | 34 | 10700 |
| 5C | 38 | 14700 |
| 5D | 37 | 19500 |
| 6 | 32 | 3300 |
| 7 [a] | 40 | 4660 |
| [a]) nicht anspruchsgemäß | | |

Mit den in der nachfolgenden Tabelle 5 aufgeführten Rezepturen wurden auf Basis dieser Basispolymere Klebstoffzusammensetzungen hergestellt:

Tabelle 5: Rezepturen für die Formulierung von Haftschmelzklebstoffen

| Rezeptur | 1 | 2 | 3 | 4 | 5 | 5v | 6 |
|---|---|---|---|---|---|---|---|
| Komponent e | Gew.-% | Gew.-% | Gew.-% | Gew.-% | Gew.-% | Gew.-% | Gew.-% |
| Basispolym er | 24,75 | 24,75 | 59,50 | 56,00 | 35,70 | 24,75 | 35,70 |
| Tackifier 1 | 29,70 | 27,50 | 0,00 | 0,00 | 14,27 | 19,83 | 21,40 |
| Tackifier 2 | 14,85 | 13,75 | 0,00 | 0,00 | 7,13 | 9,92 | 0,00 |
| Weichmacher 1 | 29,70 | 28,00 | 0,00 | 0,00 | 14,27 | 19,75 | 14,27 |

(fortgesetzt)

| Rezeptur | 1 | 2 | 3 | 4 | 5 | 5v | 6 |
|---|---|---|---|---|---|---|---|
| Komponent e | Gew.-% | Gew.-% | Gew.-% | Gew.-% | Gew.-% | Gew.-% | Gew.-% |
| Weichmacher 2 | 0,00 | 0,00 | 39,50 | 38,00 | 24,08 | 19,75 | 24,08 |
| Kautschuk | 0,00 | 5,00 | 0,00 | 5,00 | 3,55 | 5,00 | 3,55 |
| Stabilisator en | 1,00 | 1,00 | 1,00 | 1,00 | 1,00 | 1,00 | 1,00 |

Tackifier 1: Novares TNA120 der Firma Rütgers (Harz aus phenolisch modifizierten aromatischen Monomeren mit einem Erweichungspunkt von 120°C) in Rezeptur 1 bis 5v. Sylvalite RE100F der Firma Arizona Chemicals (Pentaerythritol Kolophonium Ester) in Rezeptur 6.

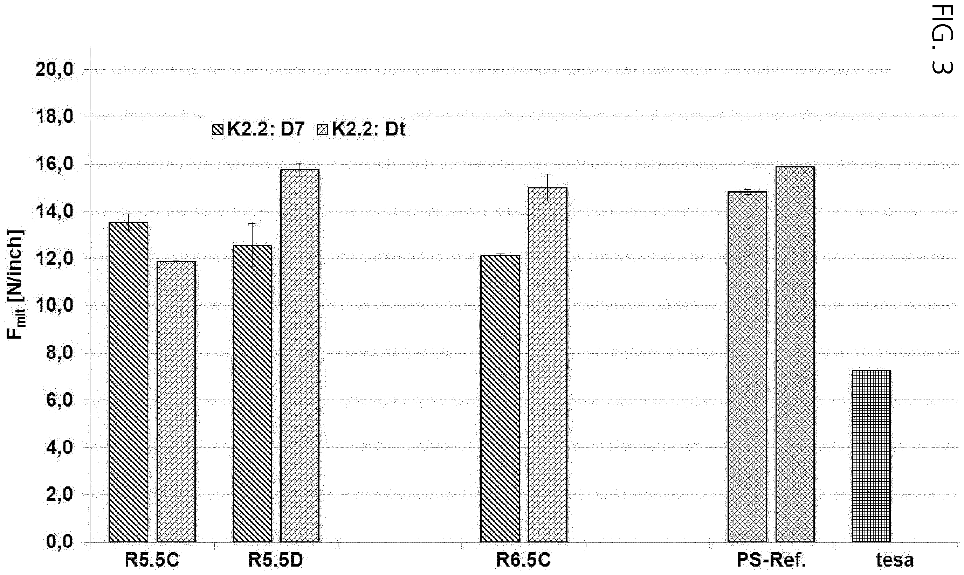

Tackifier 2: Novares TV100 der Firma Rütgers (Kohlenwasserstoffharz auf Basis ausgewählter C9-Fraktionen) Weichmacher 1: Tributylcitrat Weichmacher 2: Dynacoll 7250 der Firma Evonik (ein Polyesterpolyol) (nachfolgend D7 bezeichnet) oder Dynacoll Terra EP424.01 der Firma Evonik (ein Polyesterpolyol auf Basis von 85% nachwachsenden Rohstoffen)(nachfolgend Dt bezeichnet; wurde nur für Rezeptur 5 in Figur 3 verwendet) Kautschuk: Pearlbond ECO D590 der Firma Merquinsa (lineares, aromatisches Polyurethan basierend auf Polyolen auf Basis von 75% nachwachsenden Rohstoffen; Schmelzpunkt 82 °C, Dichte 1,19 $g/m^3$)

Stabilisatoren: Antioxidationsmittel Irganox 1010 der Firma BASF/Cognis; Wasserfänger Additiv OF oder Additiv TI der Firma Borchers; Hydrolyseschutzmittel Hydrostab, Hystab oder HG der Firma Schäfer

Es wurde herausgefunden, dass insbesondere die Kombination aus Weichmacher und Tackifier, z.B. Kohlenwasserstoffharz mit Tributylcitrat, für die Ausbildung einer hohen Eigenklebrigkeit verantwortlich ist. Zusätzlich sorgt das Zusammenspiel von Polyesterpolyol und Kautschuk für mehr Stabilität hinsichtlich der Kohäsion, wobei Polyesterpolyole ebenfalls die Eigenklebrigkeit fördern.

Rezeptur 1:

Die Formulierungen mit Poly-L-Milchsäure gemäß Beispiel 1 als Basispolymer mit der Rezeptur 1 liefert Werte für die gemessene mittlere Klebkraft von 0,7 N/inch. Dieser Wert stellt für diese Rohstoffkombination (Rezeptur 1, Tabelle 2) zugleich das Maximum dar - die meisten Formulierungen auf dieser Basis wiesen bereits Defizite bezüglich der Homogenität auf oder besaßen eine so geringe Eigenklebrigkeit, dass diese nicht messbar war

Rezeptur 2:

Die Tests mit den Formulierungen der Rezeptur 2 bringen bedeutend höhere Klebkraftwerte hervor (Figur 1). Die Werte für die mittlere Klebkraft $F_{mit}$ der Formulierungen mit den Basispolymeren 4A, 5B und 5D übertreffen mit Werten zwischen 8 und 12 N/inch. den Referenzwert des Klebefilms "tesafilm kristall-klar" der Firma Tesa. Die Werte der beiden anderen Referenzklebstoffe PS1210 N (Haftschmelzklebstoff der Firma Novamelt mit einem Erweichungspunkt von ca. 99 °C und einer Viskosität D = 92,7 $s^{-1}$) und PS1212 (Haftschmelzklebstoff der Firma Novamelt mit einem Erweichungspunkt von ca. 93 bis 97 °C und einer Viskosität D = 92,7 $s^{-1}$) liegen um ca. 3 bis 4 N/inch höher. In der gleichen Größenordnung liegt ebenfalls die Streuung der Messwerte bei den Formulierungen der o.g. Polymerproben.

In Figur 1 zeigen die linken sechs Balken die PLA-haltigen Klebstoffzusammensetzungen nach Rezeptur 2 mit den Basispolymeren gemäß Tabelle 4. Bei den Bezeichnungen R2.X steht R2 für Rezeptur 2; hinter dem Punkt ist das verwendete Basispolymer X angegeben.

Als Ergebnis kann festgehalten werden, dass durch das Hinzufügen des Kautschuks signifikante Verbesserungen erzielt werden konnten.

Basispolymer 5B:

Für das gemäß Figur 1 Erfolg versprechendste Polymer 5B wurden für alle in Tabelle 5 angegebenen Rezepturen (R1 bis R5v) die Werte für die mittlere Klebkraft $F_{mit}$ bestimmt. Zusätzlich erfolgten Messungen für einige weitere Basispolymere gemäß Tabelle 4 (in Figur 2 bezeichnet mit P.). Das Ergebnis zeigt Figur 2: Polymer 5B zeigt hervorragende Ergebnisse (schwarz ausgefüllte Balken auf der linken Seite). Die Werte für das Polymer 6 gemäß Rezeptur 4 und das Polymer 7 gemäß Rezeptur 2 liegen noch im Bereich des Klebefilms "tesafilm kristall-klar". Auch hier zeigt der Vergleich der Rezepturen R3 und R4, dass durch Hinzufügen des Kautschuks signifikante Verbesserungen erzielt werden können.

Rezeptur 5:

Anhand von Rezeptur 5 wurde der Einfluss des Molekulargewicht des Basispolymers auf die Klebstoffformulierung untersucht. Bei dem in Figur 2 gezeigten Polymer 5B beträgt die Klebkraft 8,7 $\pm$ 0,2 N/inch. Figur 3 zeigt die Ergebnisse für zahlenmittlere Molmassen, die um ca. 40% bzw. ca.90% erhöht sind. Es zeigt sich, dass zumindest die Erhöhung um 40% zu nochmals höheren Werten für die Klebkraft führt und um ca. 4 N/inch auf Werte zwischen 12 und 16 N/inch gesteigert werden kann, so dass die Werte mit denen der Referenzklebstoffe PS1210 N und PS1212 gleichauf liegen. Es zeigt sich auch, dass durch Variation des "Weichmachers 2" die mittlere Klebkraft Fmit nochmals erhöht werden kann (K2.2: D7 = Dynacoll 7250; K2.2: Dt = Dynacoll Terra EP424.01).

Messungen der komplexen Viskosität:

Tabelle 6 gibt die komplexe Viskosität für die vorstehend nächer erläuterten Rezepturen und ein gegebenes Basispolymer X an:

| Rezeptur | Basispolymer X | kompl. Viskosität $\eta$* [mPa s] (DMA; 140 °C) |
|---|---|---|
| R1 | 1 [a] | 612,13 |
| | 2V1 [a] | 802,01 |
| | 2V2 [a] | 709,22 |
| | 3V2 [a] | 668,63 |
| | 3V3 [a] | 617,22 |
| | 5B | 1351,74 |
| | 6 | 825,08 |
| R2 | 3V1 [a] | 839,57 |
| | 3V2 [a] | 1009,39 |
| | 4C [a] | 1516,31 |
| | 4A [a] | 973,26 |
| | 5B | 1006,53 |
| | 5D | 1564,70 |
| | 7 [a] | 757,12 |
| R3 | 5B | 2991,41 |
| R4 | 5B | 2811,55 |
| | 6 | 2796,43 |
| R5 (D7)* | 5B | 2546,55 |
| | 5C | 4528,09 |
| | 5D | 4314,82 |
| | 6 | 2769,38 |
| R5 (Dt)* | 5C | 3832,56 |
| | 5D | 4738,18 |
| R5v | 5B | 2546,55 |
| R6 (D7)* | 5C | 3372,00 |

(fortgesetzt)

| Rezeptur | Basispolymer X | kompl. Viskosität η* [mPa s] (DMA; 140 °C) |
|---|---|---|
| R6 (Dt)* | 5C | 3046,00 |

ᵃ) nicht anspruchsgemäß

*) Dt bzw. D7 = verwendeter "Weichmacher 2"

**Patentansprüche**

1. Klebstoffzusammensetzung, insbesondere Haftklebstoffzusammensetzung, enthaltend
ein Basispolymer, einen Kautschuk und ferner
einen Weichmacher und/oder einen Tackifier, wobei
das Basispolymer als Hauptbestandteil ein Polyesterurethan enthält oder hieraus besteht und wobei
das Polyesterurethan erhältlich ist durch:
Herstellung eines Präpolymers durch Polykondensation aus einer einer Hydroxycarbonsäurekomponente, ausgewählt aus freien α-Hydroxycarbonsäuren, freien β-Hydroxycarbonsäuren und cyclischen Dimeren der α-Hydroxycarbonsäuren, in Gegenwart einer substöchiometrischen Menge eines Diols, entweder ausgewählt aus vicinalen Diolen mit mindestens einer sekundären oder tertiären Hydroxygruppe oder ausgewählt aus im Kohlenstoffgerüst verzweigten, Alkylsubstituierten oder Cycloalkyl-substituierten Diolen mit mindestens 5 Kohlenstoffatomen , bei einer Temperatur größer 100 °C und in Gegenwart eines Katalysators und nachfolgende Umsetzung des erhaltenen Präpolymers mit einem Diisocyanat, so dass eine Reaktion der freien Hydroxy-Gruppen des Präpolymers mit den Isocyanat-Gruppen erfolgt.

2. Klebstoffzusammensetzung nach Anspruch 1, **dadurch gekennzeichnet, dass** das Polyesterurethan aus D- und L-Milchsäure oder einem entsprechenden Lactid als α-Hydroxycarbonsäurekomponente hergestellt ist und das Basispolymer im Wesentlichen aus diesem Polyesterurethan besteht.

3. Klebstoffzusammensetzung nach einem der zwei vorhergehenden Ansprüche, **dadurch gekennzeichnet, dass** die Klebstoffzusammensetzung das Basispolymer, den Kautschuk, den Weichmacher und den Tackifier enthält, wobei der Anteil des Basispolymers mindestens 10 Gew.-%, bevorzugt 20 bis 60 Gew.-% und besonders bevorzugt 25 bis 55 Gew.-%,
der Anteil des Weichmachers maximal 70 Gew.-%, bevorzugt 10 bis 60 Gew.-% und besonders bevorzugt 15 bis 50 Gew.-% und
der Anteil des Tackifiers maximal 70 Gew.-%, bevorzugt 15 bis 60 Gew.-% und besonders bevorzugt 25 bis 55 Gew.-% und
der Anteil des Kautschuks bis zu 25 Gew.-%, bevorzugt 0,5 bis 15 Gew.-%, besonders bevorzugt 1 bis 7 Gew.-% beträgt.

4. Klebstoffzusammensetzung nach einem der vorhergehenden Ansprüche,
**dadurch gekennzeichnet, dass**
der Kautschuk ein thermoplastisches Elastomer ist.

5. Klebstoffzusammensetzung nach einem der vorhergehenden Ansprüche,
**dadurch gekennzeichnet, dass**
das Diol ausgewählt ist aus verzweigten Alkyldiolen und Polyalkylenglycolen.

6. Klebstoffzusammensetzung nach einem der vorhergehenden Ansprüche,
**dadurch gekennzeichnet, dass**
der Weichmacher ausgewählt ist aus der Gruppe von Hydroxycarbonsäureestern, insbesondere Zitronensäuretrialkylestern, acyclischen Dicarbonsäureestern, epoxidierten Triacylglycerolen und Monoestern, von Polyestern und von Polyesterpolyolen.

7. Polyesterurethan erhältlich durch das Verfahren mit den folgenden Schritten:

A) Bereitstellung eines vicinalen Diols mit mindestens einer sekundären oder tertiären Hydroxygruppe, eines Diisocyanats und einer Hydroxycarbonsäurekomponente, ausgewählt aus freien α-Hydroxycarbonsäuren, frei-

EP 2 976 372 B1

en β-Hydroxycarbonsäuren und cyclischen Dimeren der α-Hydroxycarbonsäuren,

B) Herstellung eines im Wesentlichen linearen Präpolymers durch Polykondensation der Hydroxycarbonsäurekomponente in Gegenwart einer substöchiometrischen Menge des Diols bei einer Temperatur größer 100 °C und in Gegenwart eines Katalysators;

C) Umsetzung des In Schritt B) erhaltenen Präpolymers mit dem Diisocyanat, so dass eine Reaktion der freien Hydroxy-Gruppen des Präpolymers mit den Isocyanat-Gruppen erfolgt.

8. Polyesterurethan nach dem vorhergehenden Anspruch,
**dadurch gekennzeichnet, dass**
in Schritt A) als Hydroxycarbonsäurekomponente ein Gemisch der D- und L-Hydroxycarbonsäuren oder der hierzu korrespondierenden cylischen Dimere bereitgestellt wird, insbesondere in einem Gewichtsverhältnis D: L von 1:9 bis 9:1.

9. Polyesterurethan nach einem der vorhergehenden Ansprüche,,
**dadurch gekennzeichnet, dass**
in Schritt A) als Hydroxycarbonsäurekomponente Milchsäure oder Lactid bereitgestellt wird.

10. Polyesterurethan nach einem der vorhergehenden Ansprüche,,
**dadurch gekennzeichnet, dass**
die Hydroxycarbonsäurekomponente aus freien α-Hydroxycarbonsäuren und/oder freien β-Hydroxycarbonsäuren ausgewählt ist und Schritt B) zumindest zeitweise bei vermindertem Druck erfolgt.

11. Polyesterurethan nach einem der vorhergehenden Ansprüche,
dadurch gekennezeichnet, dass
als vicinales Diol ein Diol der Formel R'-CH(OH)-CH(OH)-R" bereitgestellt ist, wobei R' und R" gleich oder verschieden sein können oder miteinander cyclisch verbunden sein können und ausgewählt sind aus Alkylgruppen, Aralkylgruppen, Arylgruppen und Wasserstoff mit der Maßgabe, dass mindestens eine sekundäre Hydroxy-Gruppe enthalten ist.

12. Polyesterurethan nach dem vorhergehenden Anspruch,
**dadurch gekennzeichnet, dass**
als vicinales Diol ein Diol mit einem Siedepunkt größer 200 °C eingesetzt wird.

13. Polyesterurethan nach einem der beiden vorhergehenden Ansprüche,
**dadurch gekennzeichnet, dass**
als vicinales Diol ein Diol eingesetzt wird, bei dem R' Wasserstoff oder ein Alkylrest ist und R" ein Alkylrest ist oder bei dem R' und R" zusammen eine Alkylengruppe bilden.

14. Polyesterurethan nach einem der vorhergehenden Ansprüche,
**dadurch gekennzeichnet, dass**
die Stoffmenge des in Schritt C) eingesetzten Diisocyanats im Wesentlichen äquimolar zu der Menge der freien OH-Gruppen des Präpolymers ist.

**Claims**

1. Adhesive composition, in particular pressure-sensitive adhesive composition, comprising a base polymer, a rubber and additionally a plasticizer and/or a tackifier, wherein
the base polymer contains or is composed of a polyester urethane as principal constituent and wherein
the polyester urethane is obtainable by:
preparation of a prepolymer by polycondensation from a hydroxy carboxylic acid component, selected from free α-hydroxy carboxylic acids, free β-hydroxy carboxylic acids and cyclic dimers of α-hydroxy carboxylic acids, in the presence of a substoichiometric amount of a diol, either selected from vicinal diols having at least one secondary or tertiary hydroxy group or selected from alkylsubstituted or cycloalkyl-substituted diols branched in the carbon skeleton and having at least 5 carbon atoms, at a temperature greater than 100°C and in the presence of a catalyst, and subsequent reaction of the prepolymer obtained with a diisocyanate, with the result that the free hydroxy groups of the prepolymer react with the isocyanate groups.

2. Adhesive composition according to claim 1, **characterized in that**
the polyester urethane has been prepared from D- and L-lactic acid or a corresponding lactide as the $\alpha$-hydroxy carboxylic acid component and the base polymer consists essentially of said polyester urethane.

3. Adhesive composition according to any of the two preceding claims, **characterized in that** the adhesive composition comprises the base polymer, the rubber, the plasticizer and the tackifier, wherein
the proportion of the base polymer is not less than 10% by weight, preferably 20 to 60% by weight and more preferably 25 to 55% by weight,
the proportion of the plasticizer is not more than 70% by weight, preferably 10 to 60% by weight and more preferably 15 to 50% by weight and
the proportion of the tackifier is not more than 70% by weight, preferably 15 to 60% by weight and more preferably 25 to 55% by weight and
the proportion of the rubber is up to 25% by weight, preferably 0.5 to 15% by weight, more preferably 1 to 7% by weight.

4. Adhesive composition according to any of the preceding claims, **characterized in that** the rubber is a thermoplastic elastomer.

5. Adhesive composition according to any of the preceding claims, **characterized in that** the diol is selected from branched alkyl diols and polyalkylene glycols.

6. Adhesive composition according to any of the preceding claims, **characterized in that** the plasticizer is selected from the group of hydroxy carboxylic esters, in particular trialkyl citrates, acyclic dicarboxylic esters, epoxidized triacylglycerols and monoesters, of polyesters and of polyester polyols.

7. Polyester urethane obtainable by the method comprising the following steps:

A) providing a vicinal diol having at least one secondary or tertiary hydroxy group, a diisocyanate and a hydroxy carboxylic acid component selected from free $\alpha$-hydroxy carboxylic acids, free $\beta$-hydroxy carboxylic acids and cyclic dimers of $\alpha$-hydroxy carboxylic acids;
B) preparing an essentially linear prepolymer by polycondensation of the hydroxy carboxylic acid component in the presence of a substoichiometric amount of the diol at a temperature greater than 100°C and in the presence of a catalyst;
C) reacting the prepolymer obtained in step B) with the diisocyanate, with the result that the free hydroxy groups of the prepolymer react with the isocyanate groups.

8. Polyester urethane according to the preceding claim, **characterized in that**
the hydroxy carboxylic acid component in step A) is provided in the form of a mixture of the D- and L-hydroxy carboxylic acids or of the corresponding cyclic dimers, in particular in a D:L weight ratio of 1:9 to 9:1.

9. Polyester urethane according to any of the preceding claims, **characterized in that**
the hydroxy carboxylic acid component in step A) is supplied in the form of lactic acid or lactide.

10. Polyester urethane according to any of the preceding claims, **characterized in that**
the hydroxy carboxylic acid component is selected from free $\alpha$-hydroxy carboxylic acids and/or free $\beta$-hydroxy carboxylic acids and step B) is carried out at least intermittently under reduced pressure.

11. Polyester urethane according to any of the preceding claims, **characterized in that**
the vicinal diol is provided in the form of a diol of the formula R'-CH(OH)-CH(OH)-R", wherein R' and R" may be identical or different or linked together cyclically and selected from alkyl groups, aralkyl groups, aryl groups and hydrogen, with the proviso that there is at least one secondary hydroxy group present.

12. Polyester urethane according to the preceding claim, **characterized in that**
the vicinal diol used is a diol having a boiling point greater than 200°C.

13. Polyester urethane according to either of the two preceding claims, **characterized in that** the vicinal diol used is a diol in which R' is hydrogen or an alkyl radical and R" is an alkyl radical or in which R' and R" together form an alkylene group.

**14.** Polyester urethane according to any of the preceding claims, **characterized in that**
the molar amount of diisocyanate used in step C) is essentially equimolar with respect to the amount of free OH groups in the prepolymer.

**Revendications**

**1.** Composition d'adhésif, notamment composition d'adhésif sensible à la pression, contenant :

un polymère de base, un caoutchouc et en outre un plastifiant et/ou un agent d'adhésivité,
le polymère de base contenant un polyester-uréthane en tant que constituant principal ou en étant constitué, et
le polyester-uréthane pouvant être obtenu par :
fabrication d'un prépolymère par polycondensation d'un composant acide hydroxycarboxylique, choisi parmi les acides $\alpha$-hydroxycarboxyliques libres, les acides $\beta$-hydroxycarboxyliques libres et les dimères cycliques des acides $\alpha$-hydroxycarboxyliques, en présence d'une quantité sous-stœchiométrique d'un diol, soit choisi parmi les diols vicinaux contenant au moins un groupe hydroxy secondaire ou tertiaire, soit choisi parmi les diols ramifiés dans le squelette carboné, à substitution alkyle ou à substitution cycloalkyle, contenant au moins 5 atomes de carbone, à une température supérieure à 100 °C, et en présence d'un catalyseur, et mise en réaction ultérieure du prépolymère obtenu avec un diisocyanate, de telle sorte qu'une réaction des groupes hydroxy libres du prépolymère avec les groupes isocyanate ait lieu.

**2.** Composition d'adhésif selon la revendication 1, **caractérisée en ce que** le polyester-uréthane est fabriqué à partir d'acide D- et L-lactique ou d'un lactide correspondant en tant que composant acide $\alpha$-hydroxycarboxylique, et le polymère de base est essentiellement constitué par ce polyester-uréthane.

**3.** Composition d'adhésif selon l'une quelconque des deux revendications précédentes, **caractérisée en ce que** la composition d'adhésif contient le polymère de base, le caoutchouc, le plastifiant et l'agent d'adhésivité, la proportion du polymère de base étant d'au moins 10 % en poids, de préférence de 20 à 60 % en poids, et de manière particulièrement préférée de 25 à 55 % en poids,
la proportion du plastifiant étant d'au plus 70 % en poids, de préférence de 10 à 60 % en poids et de manière particulièrement préférée de 15 à 50 % en poids, et
la proportion de l'agent d'adhésivité étant d'au plus 70 % en poids, de préférence de 15 à 60 % en poids et de manière particulièrement préférée de 25 à 55 % en poids, et
la proportion du caoutchouc étant de jusqu'à 25 % en poids, de préférence de 0,5 à 15 % en poids, de manière particulièrement préférée de 1 à 7 % en poids.

**4.** Composition d'adhésif selon l'une quelconque des revendications précédentes, **caractérisée en ce que** le caoutchouc est un élastomère thermoplastique.

**5.** Composition d'adhésif selon l'une quelconque des revendications précédentes, **caractérisée en ce que** le diol est choisi parmi les alkyldiols ramifiés et les polyalkylène glycols.

**6.** Composition d'adhésif selon l'une quelconque des revendications précédentes, **caractérisée en ce que** le plastifiant est choisi dans le groupe constitué par les esters d'acides hydroxycarboxyliques, notamment les esters trialkyliques de l'acide citrique, les esters d'acides dicarboxyliques acycliques, les triacylglycérols époxydés et les monoesters, les polyesters et les polyester-polyols.

**7.** Polyester-uréthane pouvant être obtenu par le procédé comprenant les étapes suivantes :

A) la préparation d'un diol vicinal contenant au moins un groupe hydroxy secondaire ou tertiaire, d'un diisocyanate et d'un composant acide hydroxycarboxylique, choisi parmi les acides $\alpha$-hydroxycarboxyliques libres, les acides $\beta$-hydroxycarboxyliques libres et les dimères cycliques des acides $\alpha$-hydroxycarboxyliques,
B) la fabrication d'un prépolymère essentiellement linéaire par polycondensation du composant acide hydroxycarboxylique en présence d'une quantité sous-stœchiométrique du diol à une température supérieure à 100 °C et en présence d'un catalyseur,
C) la mise en réaction du prépolymère obtenu à l'étape B) avec le diisocyanate, de telle sorte qu'une réaction des groupes hydroxy libres du prépolymère avec les groupes isocyanate ait lieu.

**8.** Polyester-uréthane selon la revendication précédente, **caractérisé en ce qu'**à l'étape A), un mélange des acides D- et L-hydroxycarboxyliques ou des dimères cycliques correspondant à ceux-ci est préparé en tant que composant acide hydroxycarboxylique, notamment en un rapport en poids D:L de 1:9 à 9:1.

**9.** Polyester-uréthane selon l'une quelconque des revendications précédentes, **caractérisé en ce qu'**à l'étape A), un acide lactique ou un lactide est préparé en tant que composant acide hydroxycarboxylique.

**10.** Polyester-uréthane selon l'une quelconque des revendications précédentes, **caractérisé en ce que** le composant acide hydroxycarboxylique est choisi parmi les acides $\alpha$-hydroxycarboxyliques libres et/ou les acides $\beta$-hydroxy-carboxyliques libres, et l'étape B) a lieu au moins périodiquement à pression réduite.

**11.** Polyester-uréthane selon l'une quelconque des revendications précédentes, **caractérisé en ce qu'**un diol de la formule R'-CH(OH)-CH(OH)-R" est préparé en tant que diol vicinal, R' et R" pouvant être identiques ou différents, ou pouvant être reliés cycliquement l'un avec l'autre, et étant choisis parmi les groupes alkyle, les groupes aralkyle, les groupes aryle et l'hydrogène, à condition qu'au moins un groupe hydroxy secondaire soit contenu.

**12.** Polyester-uréthane selon la revendication précédente, **caractérisé en ce qu'**un diol ayant un point d'ébullition supérieur à 200 °C est utilisé en tant que diol vicinal.

**13.** Polyester-uréthane selon l'une quelconque des deux revendications précédentes, **caractérisé en ce qu'**un diol dans lequel R' représente l'hydrogène ou un radical alkyle et R" représente un radical alkyle, ou dans lequel R' et R" forment ensemble un groupe alkylène est utilisé en tant que diol vicinal.

**14.** Polyester-uréthane selon l'une quelconque des revendications précédentes, **caractérisé en ce que** la quantité de matière du diisocyanate utilisé à l'étape C) est essentiellement équimolaire à la quantité des groupes OH libres du prépolymère.

FIG. 1

FIG. 2

FIG. 3

EP 2 976 372 B1

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5252646 A
- EP 1236753 A1
- WO 9601863 A1
- US 4804691 A
- EP 2492328 A1

**In der Beschreibung aufgeführte Nicht-Patentliteratur**

- Electronic Release. Ullmann's Encyclopedia of Industrial Chemistry. 2001
- *Taschenbuch der Kunststoffadditive,* 1979
- FINATTechnisches Handbuch. 2005